(19) Europäisches Patentamt European Patent Office Office européen des brevets

(11) **EP 4 195 578 B1**

(12) **EUROPEAN PATENT SPECIFICATION**

(45) Date of publication and mention of the grant of the patent:
**07.02.2024 Bulletin 2024/06**

(21) Application number: **21290083.1**

(22) Date of filing: **13.12.2021**

(51) International Patent Classification (IPC):
**H04L 9/00** *(2022.01)* **H04L 9/30** *(2006.01)*

(52) Cooperative Patent Classification (CPC):
**H04L 9/008; H04L 9/3093;** H04L 2209/04;
H04L 2209/08

(54) **POLYNOMIAL MULTIPLICATION OF ENCRYPTED VALUES**

POLYNOMIALE MULTIPLIKATION VERSCHLÜSSELTER WERTE

MULTIPLICATION POLYNOMIALE DE VALEURS CRYPTÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Zama SAS**
**75002 Paris (FR)**

(72) Inventor: **Joye, Marc**
**83640 Saint Zacharie (FR)**

(74) Representative: **DeltaPatents B.V.**
**Fellenoord 370**
**5611 ZL Eindhoven (NL)**

(56) References cited:
**US-A1- 2019 312 728**

- **ILARIA CHILLOTTI ET AL: "Programmable Bootstrapping Enables Efficient Homomorphic Inference of Deep Neural Networks", IACR, INTERNATIONAL ASSOCIATION FOR CRYPTOLOGIC RESEARCH , vol. 20210127:133406 25 January 2021 (2021-01-25), pages 1-18, XP061051918, Retrieved from the Internet:URL:https://eprint.iacr.org/2021/091.pdf [retrieved on 2021-01-25]**
- **ROY SUJOY SINHA ET AL: "Hardware Assisted Fully Homomorphic Function Evaluation and Encrypted Search", IEEE TRANSACTIONS ON COMPUTERS, IEEE, USA, vol. 66, no. 9, 1 September 2017 (2017-09-01), pages 1562-1572, XP011658956, ISSN: 0018-9340, DOI: 10.1109/TC.2017.2686385 [retrieved on 2017-08-18]**

## Description

### TECHNICAL FIELD

The presently disclosed subject matter relates to a computer-implemented encrypted computation method, to a computer-implemented method of computing a representation of a ciphertext, to corresponding devices, and to a computer readable medium.

### BACKGROUND

Homomorphic cryptography allows one to perform encrypted computations: computations, e.g., circuit evaluations, that are performed over encrypted data by a party without that party being able to decrypt. For example, input data and computation results may be received and returned in encrypted form. Intermediate data, e.g., an internal state of the computation, may also be in encrypted form.

Even though the result of the computation is returned in an encrypted form, when decrypted the output is expected to be the same, or very close to, as if the operations had been performed on the unencrypted data, Homomorphic encryption can be used for privacy-preserving outsourced storage and computation. This allows data to be encrypted and outsourced to a cloud environment for processing and/or storage, all while encrypted.

For example, homomorphic cryptography may be applied in fields such as health care in which privacy regulations may make it difficult to share plain data, but computations on encrypted medical data may be allowable. For example, a medical model developed, say, to classify medical data may be configured to receive medical data from a third party, say a hospital, in encrypted form. The medical model might, e.g., classify medical data, e.g., as normal or abnormal, or as having some particular medical syndrome, disease, or other disorder. Using homomorphic encryption, the medical model may be applied to medical data that is received in encrypted form. This means that the party that offers the medical model does not have access to the plain medical data that corresponds to the encrypted medical data. The user of the service can decrypt the result of the medical model application.

In particular, homomorphic cryptography techniques exist that can be used, at least in principle, to compute any function on encrypted data. Such techniques are referred to as "fully homomorphic encryption" (FHE) techniques.

Known implementations of FHE use noisy ciphertexts for security reasons. For example, encryption of a data item may comprise mapping the data item to a point in a key-dependent lattice, to which noise is added. In particular, many known implementations of FHE use Generalized Learning With Errors (GLWE)-based ciphertexts, e.g., Ring Learning With Errors (RLWE) ciphertexts, whose security depends on the cryptographic hardness of the Generalized Learning With Errors problem, in particular the Ring Learning With Errors (RLWE) problem for RLWE-based ciphertexts. Such a "GLWE-based", or "GLWE-type" ciphertext may comprise one or more mask polynomials plus a body polynomial which is derived from the mask polynomials and a plaintext and which contains the noise.

When a data item has just been encrypted the noise is low - the encryption is fresh. For example, the amount of noise is so low, that if a data item were to be decrypted, the noise can be removed at some point in the decryption process, e.g., by rounding. On the other hand, the noise should be high enough to make attacks on the system sufficiently hard. For example, in the hypothetical absence of noise, many homomorphic encryption schemes could be attacked with linear algebra, or other efficient algorithms, e.g., lattice reduction algorithms. When a data item is encrypted, noise is added that is chosen so that attacks are hard while homomorphic operations can still be performed.

Most homomorphic operations increase the noise that is inherent in a homomorphically encrypted data item. When many such operations are performed, the noise may reach a level such that unique decryption is no longer possible. Generally, it is known to use a technique called bootstrapping to reduce the noise of a homomorphically encrypted value. Bootstrapping may use a public key called a bootstrapping key. By using bootstrapping to reducing noise when needed, in principle it is possible to compute any desired number of homomorphic operations.

A particular class of fully homomorphic encryption schemes are the TFHE-like homomorphic encryption schemes. Such a scheme is described in I. Chillotti et al., "TFHE: Fast fully homomorphic encryption over the torus", J. Cryptol., 33(1):34-91, 2020. TFHE-like schemes differentiate themselves from other FHE schemes by supporting a comparatively very efficient technique for bootstrapping. This bootstrapping technique can reduce noise in an LWE-encrypted input value by homomorphically evaluating an LWE decryption in an exponent of a GLWE-encrypted monomial, resulting in an LWE-encrypted output value with an amount of noise that is independent of the noise in the LWE-encrypted input value. The TFHE bootstrapping is also programmable in the sense that the output value can be the result of applying a function on the input value. An example of such a programmable bootstrapping is described in I. Chillotti et al., "Programmable bootstrapping enables efficient homomorphic inference of deep neural networks", Cyber Security Cryptography and Machine Learning (CSCML 2021), vol. 12718 of Lecture Notes in Computer Science, pp. 1-19, Springer, 2021.

The TFHE programmable bootstrapping relies on the computation of so-called external products of GGSW-type (Generalized GSW-type, e.g. RGSW-type) ciphertexts Cwith GLWE-based ciphertext c. Generally, a GGSW-type ciphertext C encrypting a plaintext e.g. as described in "Programmable bootstrapping enables efficient homomorphic inference of deep neural networks" comprises multiple respective GLWE-based ciphertexts $c_i$ encrypting respective values that are based on the plaintext. The computation of the external product involves multiplying the respective GLWE-based ciphertexts $c_i$ by respective multiplicand polynomials that are based on the GLWE-based ciphertext c with which the GGSW-type ciphertext is to be computed. To perform these polynomial multiplications effectively, TFHE employs a Fast Fourier Transform (FFT) over the complex numbers, using roots of unity $\omega^j$ where $\omega \in \mathbb{C}$ and $\omega^M = 1$ with $1 \leq j < M$. The external product results an encryption of a product of the GGSW-type ciphertext C and the GLWE-based ciphertext c, A programmable bootstrapping is based on a bootstrapping key containing multiple such GGSW-type encryptions and involves repeatedly computing external products with these GGSW-type ciphertexts.

Since the bootstrapping key used for the programmable bootstrapping contains a multitude of GGSW-type ciphertexts that themselves contain a multitude of GLWE-based ciphertexts, the bootstrapping key is comparatively large to store and transfer. For example, for typical TFHE parameters, the bootstrapping key may be approximately 62 MB in size. However, this size can be reduced by defining the coefficients of mask polynomials as the outputs of a pseudo random function, of which just the seed then needs to be stored. When using the key, the pseudo random function is then evaluated to obtain the coefficients of the mask polynomials, and this representation is converted to complex evaluations of the mask polynomials over the complex roots of unity in which the FFT is performed. For example, when using Ring LWE, the size of the bootstrapping key can be reduced by about a factor of two to around 31 MB for typical parameters.

## SUMMARY

According to one aspect of the invention, a computer-implemented encrypted computation method is provided, as defined by the claims. According to a further aspect of the invention, a computer-implemented method of computing a representation of a ciphertext is provided, as defined by the claims. According to further aspects, devices to these computer-implemented methods are provided, as defined by the claims. According to another aspect, a computer-readable medium is provided as defined by the claims.

The computation method may involve a polynomial multiplication of a GLWE-based ciphertext, for example, performed as part of an external product of a GGSW-type ciphertext in which the ciphertext is comprised. The ciphertext may comprise one or more random mask polynomials, and a body polynomial derived from the mask polynomial and a plaintext. The polynomial multiplication may involve multiplying the mask and body polynomials of the ciphertext by respective multiplicand polynomials, for example, by a common multiplicand polynomial.

The ciphertext may be stored as data in a memory. For example, the data may be retrieved from a persistent storage such as a hard drive, or the data may be stored in a volatile memory, e.g., RAM, having been previously received from another party, e.g., the party who has computed the ciphertext. In any case, it is desirable if the stored data is as small as possible. As discussed above, the ciphertext may be stored relatively efficiently if the party who computes the ciphertext, uses a pseudo-random number generator (PRNG; preferably, a cryptographic PRNG) to generate the coefficients of the mask polynomials. Rather than including the mask polynomials in the stored data, the seed can then be stored instead. However, in order to efficiently compute the polynomial multiplication using FFT, the coefficients of the mask polynomials then first need to be converted to the Fourier domain, namely, to evaluations of these polynomials at complex roots of unity.

The inventor made two important realizations. First, that it is also possible to define the stored data for a ciphertext in such a way that the PRNG does not generate the mask polynomials in their regular coefficient representation, but instead generates representations of the mask polynomials in the Fourier domain, e.g., as evaluations of the polynomials in a set of evaluation values. To this end, when performing the encryption of a plaintext, the body polynomial may be computed in such a way that the ciphertext is a correct encryption of the plaintext with respect to mask polynomials generated in the Fourier domain according to the PRNG, as opposed to with respect to mask polynomials whose coefficients are obtained from the PRNG,

In particular, to perform the encryption, the PRNG may be applied according to the seed to generate the representations of the mask polynomials in the Fourier domain. These representations may be converted to their regular coefficient representation. The coefficient representation may be used to encrypt the plaintext based on the random mask polynomials as is known per se, resulting in a body polynomial in coefficient representation. The body polynomial may then be converted back to the Fourier domain, and output along with the seed as a representation of the ciphertext.

To perform a polynomial multiplication of a ciphertext represented in this way, it may suffice to expand the representation by using the pseudo-random number generator according to the seed to generate representations of the mask polynomials directly in the Fourier domain. Polynomial products of the mask and body polynomials by respective multiplicand polynomials can then be computed efficiently in the Fourier domain. The polynomial products may result in representations of the computed polynomial products in the Fourier domain. These representations can then be output, e.g. in their Fourier domain representation, or converted back into coefficient representation as desired. Interestingly, conversion of the ciphertext into the Fourier domain during use is not necessary any more, making it more efficient to use the ciphertext. This conversion is now effectively done during the encryption of the ciphertext. Still, the ciphertext can be stored efficiently by storing the seed. Since, once encrypted, such a ciphertext may be re-used many times and/or by many different parties, e.g., when used for bootstrapping keys or the like, this is a worthwhile trade-off.

The second important realization made by the inventor is that, for security reasons, it is beneficial to use a Fourier domain of a number-theoretic transform, instead of using a Fourier domain of a complex FFT as is done in TFHE-like schemes today. The number-theoretic transform is a technique that is known per se to perform efficient multiplications in polynomial rings. To perform polynomial multiplications using the NTT, the polynomials may be represented in the Fourier-domain representation of the NTT. Typically, a Fourier-domain representation of a polynomial comprises a number of respective evaluations of the polynomial in a number of respective evaluation points. When in Fourier-domain representation, the polynomials may be efficiently multiplied, e.g., by pointwise multiplication of the evaluations. Moreover, using the NTT, it is possible to efficiently compute the Fourier-domain representation of a polynomial from its coefficient representation (by applying the number-theoretic transform itself) and to efficiently compute a coefficient representation from the Fourier-domain representation (using the inverse number-theoretic transform).

Various number-theoretic transforms are known per se, including the Discrete Fourier Transform (defined, in its standard form, for quotient polynomial $X^n$ -1 and prime power modulus $q$ with $n|q$ -1; see, e.g., J. von zur Gathen and J. Gerhard, "Modern Computer Algebra", Cambridge University Press, 3rd edition, 2013, chapter 8; Schönhage's algorithm and Nussbaumer's algorithm; see, e.g., D. J. Bernstein, "Multidigit multiplication for mathematicians", Unpublished manuscript, available at https://cr.yp.to/papers.html#m3. Thus, performing a polynomial multiplication "using the number-theoretic transform" may generally refer to performing the polynomial multiplication in the Fourier domain of the number-theoretic transform, optionally combined with using the NTT and/or its inverse to convert polynomials from and to this Fourier-domain representation.

The advantage of using a number-theoretic transform is that randomly generating a Fourier domain representation of a number-theoretic transform, and converting it to a polynomial, may lead to a random polynomial, in other words to a polynomial that is just as random as when the coefficients would be separately randomly generated. This is not true for the complex FFT, where Fourier representations of uniformly random polynomials are not uniformly distributed.

Thus, using the PRNG to generate representations of mask polynomials in a Fourier domain of a number-theoretic transform, may result in ciphertexts with the same probability distribution as ciphertexts constructed in the regular way with randomly generated coefficients, which is not the case for the complex FFT. Accordingly, problems where the distribution of ciphertexts may leak information about the underlying plaintext, are avoided. This way, ciphertexts are obtained that are secure and compactly represented, yet allow efficient polynomial multiplication.

Generalizing from GLWE, the provided techniques apply to "GLWE-like" ciphertexts, meaning a ciphertext that comprises random mask polynomials and a body polynomial. The techniques are applicable in situations where the mask and body polynomials of such a GLWE-like ciphertext are to be multiplied by respective multiplicand polynomials, in particular, the provided techniques apply to encrypted computation techniques that use stored key material which comprises such ciphertexts, and in which the key material is used by multiplying it by respective polynomials.

In an embodiment, the techniques are applied in a "TFHE-like" encrypted computation. Such a TFHE-like encrypted computation is characterized by the use of a programmable bootstrapping operation that is based on evaluating a decryption in an exponent of an encrypted monomial. Specifically, the programmable bootstrapping may comprise a blind rotation that results in an encrypted polynomial product of a test polynomial and a bootstrapping monomial, where the bootstrapping monomial represents the plaintext value as an exponent. This evaluation is computed using an external product of a GGSW-type ciphertext of a bootstrapping key. Such a GGSW-type ciphertext may comprise multiple GLWE-like ciphertexts, and the computation of the external product may involve multiplying the respective ciphertexts of the GGSW-type ciphertext by respective polynomials. In such a TFHE-like setting, bootstrapping keys are relatively large so it is important that they can be stored and transmitted more efficiently, while at the same time, the programmable bootstrapping is an important and relatively heavy operation, so it is also important that it can be performed efficiently. Using the provided techniques, the bootstrapping keys can be stored more efficiently, yet still allow efficient application of the programmable bootstrapping.

In an embodiment, the techniques are used to obliviously select a first GLWE ciphertext or a second GLWE ciphertext based on the GGSW ciphertext. This oblivious selection may be performed by computing an external product of the GGSW ciphertext and a difference between the first and second GLWE ciphertexts. The first GLWE ciphertext may then be added to the computed product. This operation is also known as a controlled selector gate or controlled multiplexer, CMux. The CMux operation may be part of a programmable bootstrapping, but can also be used directly as a gate in a homomorphic circuit evaluation, for example.

In an embodiment, coefficients of the respective multiplicand polynomials may be obtained, and the number-theoretic transform may be applied to convert the coefficients of the respective multiplicand polynomials into the Fourier domain. This way, a GLWE-based ciphertext may be multiplied by multiplicand polynomials available in coefficient form. Multiplication in the Fourier domain can typically be implemented much more efficiently than in the coefficient domain, even when including such conversions. There can be additional operations in between the conversion into the Fourier domain and the polynomial multiplication, e.g., additions or multiplications (by a constant or another Fourier-domain represented polynomial) may be applied in the Fourier domain to the multiplicand polynomials prior to the multiplication.

In an embodiment, an inverse number theoretic transform may be applied to convert a representation of a computed polynomial product in the Fourier domain to coefficients of the computed polynomial product. This way, a coefficient representation may be obtained that can be used in subsequent computations, e.g., sample extraction, key switching, etc. Also here, it is possible to perform additional operations in the Fourier domain, such as addition or multiplication, in between the computation of the product and the application of the inverse number theoretic transform.

In an embodiment, the expanded stored data representing the GLWE-based ciphertext may be kept in a memory. The expanded stored data may be used to compute further polynomial products of the mask polynomials and the body polynomials by further multiplicand polynomials. Thus, for these further polynomial products, the expansion of the stored data does not need to be re-done, leading to increased efficiency. Still, when the GLWE-based ciphertext needs to be stored again, or when it is desired to decrease its memory footprint, this can be done by discarding the mask polynomials and only storing the seed that was used to generate them.

Generally, polynomials as described herein, e.g., the body and mask polynomials, may be defined as polynomials modulo a quotient polynomial $p(X)$. For example, the polynomials may be defined over the ring $R = \mathbb{Z}/q\mathbb{Z}$ by defining them as elements of the polynomial quotient ring $R[X]/(p(X))$. Or, the polynomials may be defined over the module $\mathbb{T}_q = q^{-1}\mathbb{Z}/\mathbb{Z}$ by defining them as polynomials in $\mathbb{T}_q[X]/(p(X))$ over a (discretized) torus $\mathbb{T}_q = q^{-1}\mathbb{Z}/\mathbb{Z}$ noting that $\mathbb{T}_q \cong \mathbb{Z}/q\mathbb{Z}$. Specifically, any polynomial $f(X) = \sum_l f_l X^l \in \mathbb{T}_q[X]/(p(X))$ with $f_l \in \mathbb{T}_q$ can be associated with a polynomial $\bar{f}(X) = \sum_l \bar{f}_l X^l \in (\mathbb{Z}/q\mathbb{Z})[X]/(p(X))$ with $\bar{f}_l \in \mathbb{Z}/q\mathbb{Z}$ where $f_i = \bar{f}_i/q$. Generally, it is desired for quotient polynomial $p(X)$ to be an irreducible polynomial, since this is typically beneficial for cryptographic security.

In an embodiment, the quotient polynomial $p(X)$ divides the polynomial $X^M$ - 1 for a positive integer $M$, e.g., is equal to $X^M$ -1 or is a lower-degree polynomial strictly dividing it. The number of elements $q$ of the set that the polynomials are defined over (e.g., $\mathbb{Z}/q\mathbb{Z}$ or $\mathbb{T}_q$ ) may be selected such that $\mathbb{Z}/q\mathbb{Z}$ comprises a primitive root of unity of order $M$. In such cases, polynomial multiplication in the Fourier domain can be implemented particularly efficiently since polynomial multiplication modulo $X^n$ -1 may be implemented as pointwise multiplication of evaluations of the multiplicand polynomials in the set of powers of the primitive root of unity. Throughout this specification, the term "primitive root of unity" is as defined in J. von zur Gathen and J. Gerhard, "Modern Computer Algebra", Cambridge University Press, 3rd edition, 2013. Other efficient polynomial multiplication implementations in the Fourier domain include Nussbaumer's method or Schönhage method; interestingly, for those variants, the condition on parameters $M$ and $q$ translates into $M$ being invertible modulo $q$.

For example, the quotient polynomial may be any quotient polynomial $p(X)$ dividing $X^M$ - 1, and the Fourier representation of a polynomial may be defined as a set of evaluations of the polynomial in a set of powers of the primitive $M$th root of unity. The Fourier representations may be multiplied by pointwise multiplication of the evaluations in the respective powers of the primitive $M$th root of unity. In order for the number-theoretic transform between the coefficient representations and the Fourier-domain representations to be efficient, it is advantageous if $M$ contains one or more powers of two and/or one or more powers of three, e.g., $M$ is a power of two or $M$ is a power of three.

In some cases, the Fourier representation of the polynomial may comprise evaluations in each of the powers of the root of unity. However, this is not necessary. In various cases, it suffices to use a subset of the powers, leading to a more efficient Fourier-domain representation. This is in particular the case if the quotient polynomial is equal to ($X^M$ -1)/($X^d$ - 1), where $M = hd$ and $d = M - N$ (and thus $N = M - d = (h - 1)d$). For example, the quotient polynomial may be ($x^{2d}$ - 1)/($X^d$ - 1) = ($X^d$ + 1) = ($X^N$ + 1) for the case $h$ = 2 or ($X^{3d}$ - 1)/($X^d$ - 1) = ($X^{2d}$ + $X^d$ + 1) = ($X^N$ + $X^{N/2}$ + 1) for the case $h$ = 3. In such cases, the Fourier domain representations of a polynomial may be defined as evaluations of the polynomial in only a subset of the powers of a primitive $M$th root of unity $\omega$, for example, the powers $\omega$, $\omega^3$, ..., $\omega^{2d-1}$ for the case $h$ = 2 and in the powers ($\omega,\omega^2$), ($\omega^4,\omega^5$), ..., ($\omega^{3d-2},\omega^{3d-1}$) for the case $h$ = 3. To multiply the polynomials, only the evaluations for this subset of powers of the root of unity suffice, leading to a more efficient polynomial multiplication. Still, an efficient number-theoretic transform and inverse are possible.

For example, quotient polynomial $X^N$ + 1 may be used in combination with a primitive 2N-th root of unity. For example, number of elements $q$ may be selected such that the ring $\mathbb{Z}/q\mathbb{Z}$ Is the prime field $\mathbb{F}_q$ with number of elements $q \equiv 1$ mod $2N$. Quotient polynomial $X^N$ + 1, in particular where $N$ is a power of two, is beneficial, since many known homomorphic encryption schemes, e.g., TFHE schemes, are defined in terms of this quotient polynomial and can thus be readily used in combination with the proposed techniques. Choosing prime $q = 2^{64} - 2^{32} + 1$ is particularly beneficial, because operations in this field can be implemented particularly efficiently on computer processors using 32-bit and/or 64-bit integer arithmetic.

Quotient polynomial $X^N + X^{N/2} + 1$ can be used in combination with an even number of elements $q$, for example, a power of two. This is beneficial because it allows efficient arithmetic, and because using a power of two is needed for some applications.

In an embodiment, multiple GLWE-based ciphertexts may be generated to generate a GGSW-type ciphertext, For example, multiple such GGSW-type ciphertexts may be generated to generate a bootstrapping key for a TFHE-type programmable bootstrapping, e.g., by generating respective GGSW-type ciphertext encrypting respective parts of a decryption key. Generally, a GGSW-type ciphertext may be defined as a ciphertext that comprises multiple GLWE-based ciphertexts encrypting respective values based on a plaintext, in such cases, multiple GLWE-based ciphertexts may be based on the same seed, e.g., the same seed may be used to generate respective, different, random mask polynomials for the respective ciphertexts. Thus, it may suffice to store only a single seed per GGSW-type ciphertext or even per bootstrapping key, for example, thus further reducing the storage requirements.

The provided techniques for improved computations on encrypted data may be applied in a wide range of practical applications. Such practical applications include the encrypted evaluation of software programs without having access to plain data. For example, one may evaluate medical diagnostic software on medical data without having actual access to said medical data. Medical data may comprise a medical image. A medical image may comprise, e.g., multi-dimensional image data, e.g., to two-dimensional (2D), three-dimensional (3D) or four-dimensional (4D) images, acquired by various acquisition modalities such as, but not limited to, standard X-ray imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

In an embodiment, the provided techniques may be used to evaluate a neural network on encrypted inputs. The party evaluating the neural network may or may not have plaintext access to the trained parameters of the neural network, e.g., weights and biases. In general, the techniques provided herein, e.g., the improved polynomial multiplication, programmable bootstrapping, and external product, improve the efficiency of evaluating the neural network and/or reduce storage and transmission requirements for the used ciphertexts or key material.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer. In an embodiment, the computer program comprises computer program code adapted to perform all or part of the steps of an embodiment of the method when the computer program is run on a computer. Preferably, the computer program is embodied on a computer readable medium.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Fig. 1a schematically shows an example of an embodiment of a device for performing an encrypted computation and/or computing a representation of a ciphertext;
Fig. 1b schematically shows an example of an embodiment of an encrypted computation system;
Fig. 2 schematically shows an example of an encryption unit;
Fig. 3a schematically shows an example of an encrypted multiplication unit;
Fig. 3b schematically shows an example of an encrypted multiplication unit;
Fig. 4a schematically shows an example of external product computation unit;
Fig. 4b schematically shows an example of a bootstrapping unit;
Fig. 5a schematically shows an example of an embodiment of a computer-implemented encrypted computation method;
Fig. 5b schematically shows an example of an embodiment of a computer-implemented method of computing a representation of a ciphertext;
Fig. 5c schematically shows a computer readable medium having a writable part comprising a computer program according to an embodiment;

Fig. 5d schematically shows a representation of a processor system according to an embodiment.

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

The provided techniques use ciphertexts that comprise one or more mask polynomials and a body polynomial. The mask and body polynomials may be defined as polynomials modulo a quotient polynomial $p(X)$, e.g., over $R[X]/(p(X))$ where R is a ring or can be associated with a ring, e.g., $R = \mathbb{Z}/q\mathbb{Z}$ or $R = q^{-1}\mathbb{Z}/\mathbb{Z}$. A typical choice for the quotient polynomial is $p(X) = X^N + 1$ where $N$ is a power of two, or another irreducible polynomial $p(X)$. The mask polynomials may be selected uniformly at random, e.g., may have coefficient selected uniformly at random from $R$. The body polynomial may be a function of the mask polynomials, a plaintext polynomial to be encrypted, and an error polynomial. For example, the function can be an inner product of the mask polynomials with secret key elements, to which the plaintext and error polynomial are added, although the provided techniques work for other functions as well.

As a concrete example, a ciphertext may be computed as: TGLWE$_{s'}(\mu) = (a_1, ..., a_k, b = \sum_{j=1}^{k} s'_j \cdot a_j + \mu + e)$, where $a_i$ are the mask polynomials, $b$ is the body polynomial, $\mu$ is the plaintext, and e is the error polynomial. The error may be sampled from a noise distribution relating to the underlying cryptographic problem. The secret key $s'$ may be sampled according to a secret key distribution relating to the underlying cryptographic problem, for instance as polynomials with binary coefficients, e.g., $s' = (s'_1, ..., s'_k) \in \mathbb{B}_N[X]^k$, where $\mathbb{B} = \{0,1\}$ and $\mathbb{B}_N[X] = \mathbb{B}[X]/(X^N + 1)$. In a more general case, the secret key $s'$ can be sampled over $R[X]/(p(X))$ for a ring $R$, e.g., see European patent application EP21290025.

In the above example, $s'$ is a symmetric key, e.g., a key that is usable both for encryption and for decryption. Throughout this specification, symmetric secret keys are used as an example, and in this case, the secret key is used both as an encryption key and a decryption key. The ciphertexts may be used in an asymmetric setting as well, e.g., by using $s'$ as the private key, e.g., the decryption key, and providing encryptions of zero as the public key, e.g., the encryption key for example using the techniques of R. Rothblum, "Homomorphic encryption: From private-key to public-key", Theory of Cryptography (TCC 2011), vol. 6597 of Lecture Notes in Computer Science, pp. 219-234, Springer, 2011. In such cases, in order to compute a compressed representation of a ciphertext from a plaintext according to the provided techniques, however, the private decryption key $s'$ is typically used.

For example, the ciphertexts may be GLWE-based ciphertexts, in the sense that their security is based on the cryptographic hardness of the Generalized Learning With Errors (GLWE) problem. The particular case $k = 1$, e.g., one mask polynomial is used, is also referred to as the Ring Learning With Errors (RLWE) problem. The dimension of the used polynomial ring is greater than one, e.g., the GLWE-based ciphertexts used herein are not Learning With Errors (LWE) ciphertexts.

In particular, the polynomials may be defined over the discretized torus, e.g., $R = \mathbb{T}_q = q^{-1}\mathbb{Z}/\mathbb{Z}$ for a positive integer $q$. For example, the polynomials may be elements of $\mathbb{T}_{N,q}[X] = \mathbb{T}_q[X]/(X^N + 1)$, e.g., where $N > 1$, e.g., a power of two, A ciphertext encrypting a plaintext $\mu \in \mathbb{T}_{N,q}[X]$ may comprise $k + 1$ elements from the polynomial ring, e.g., $k$ mask polynomials and a body polynomial, and may thus be an element of $\mathbb{T}_{N,q}[X]^{k+1}$. The mask polynomials may be selected uniformly at random from $\mathbb{T}_{N,q}[X]$, $a_j \leftarrow_R \mathbb{T}_{N,q}[X]$. The error polynomial may be a random Gaussian error defined over $q^{-1}\mathbb{Z}[X]/(X^N + 1)$.

Such polynomials over the discretized torus may be multiplied by multiplicand polynomials from a corresponding polynomial quotient ring. More precisely, mask and body elements of $\mathbb{T}_q[X]/(p(X))$ may be multiplied by multiplicand polynomials from $R[X]/(p(X))$, where $\mathbb{T}_q = q^{-1}\mathbb{Z}/\mathbb{Z}$ and $R = \mathbb{Z}/q\mathbb{Z}$. Such multiplications may be performed on TFHE bootstrapping keys, for example. These multiplications correspond to multiplication of elements of the ring $R[X]/(p(X))$ by identifying elements of the torus $\mathbb{T}_q$ with elements of the corresponding ring $R = \mathbb{Z}/q\mathbb{Z}$. Precisely, let

$$\mathfrak{M} = \mathbb{T}_q = q^{-1}\mathbb{Z}/\mathbb{Z} \cong$$

$$\frac{\mathbb{Z}/q\mathbb{Z}}{q}, \quad R[X]/(X^N + 1) = \mathbb{Z}_{N,q}[X] = (\mathbb{Z}/q\mathbb{Z})[X]/(X^N + 1) \quad \text{and}$$

$$\mathfrak{M}[X]/(X^N + 1) = \mathbb{T}_{N,q}[X].$$

From $q^{-1}\mathbb{Z} \cong \frac{\mathbb{Z}/q\mathbb{Z}}{q}$, if $f^\vee \in \mathbb{T}_{N,q}[X]$ and $g \in \mathbb{Z}_{N,q}[X]$, the (external) product $h^\vee := f^\vee g \in \mathbb{T}_{N,q}[X]$ may be defined by letting $h := f g \in \mathbb{Z}_{N,q}[X]$, where $f^\vee = \frac{1}{q}f$ with $f \in \mathbb{Z}_{N,q}[X]$; and letting $h^\vee = \frac{1}{q}h$. Accordingly, the multiplication corresponds to a multiplication of two polynomials over the ring $\mathbb{Z}_{N,q}[X]$, namely, the computation of $h = fg$ in $\mathbb{Z}_{N,q}[X]$.

The discretized torus is frequently used in so-called TFHE-like schemes, by which schemes are meant that support a programmable bootstrapping operation. In such a scheme, an encrypted computation may be performed on LWE-based ciphertexts, e.g., GLWE-based ciphertext in which the mask and body polynomials are scalar values. As part of such a computation, a programmable bootstrapping may be applied on such an LWE-based ciphertext, as also described elsewhere. This programmable bootstrapping may involve GGSW-type ciphertexts encrypting digits, e.g., bits of the LWE secret key, which ciphertexts may be defined on the discretized torus, e.g., as described above..

The programmable bootstrapping operation in TFHE-like schemes makes them an appealing choice for a wide range of applications. Because bootstrapping is relatively efficient compared to many other FHE schemes, it is much more feasible to perform relatively complex computations, e.g., with a multiplicative depth of at least 10, -at least 50, or at least 100. In particular, the cryptographic parameters of TFHE-like schemes can be selected based on the required precision and resulting computational cost, independently from the quantity of homomorphic operations and their circuit depth. In other FHE schemes, in contrast, bootstrapping can be so inefficient that, in practice, these schemes are typically applied in a levelled way, meaning that their parameters are selected depending on a given computation such that it can be performed without the need for bootstrapping. Such a levelled approach is not feasible for more complex computations, however, so in such cases, TFHE-like schemes are particularly beneficial.

For example, a bootstrapping key of a TFHE-like encryption scheme may comprise $n$ GGSW-type ciphertexts encrypting key digits of a LWE secret key, where typically $n$ is at most 1000 or at most 640, e.g., $n = 630$. A GGSW-type ciphertext may for example comprise $l = 3$ GLWE-based ciphertexts, each comprising $k = 1$ mask polynomial (e.g., RLWE may be used) and one body polynomial. The dimension of the polynomial ring may be chosen as $N = 1024$, and cardinality $q$ associated to the polynomials may be $q = 2^{64}$, for example.

However, other parameters are also possible as known per se. Generally, the security of GLWE-based ciphertexts is based on the distribution of the secret key, and on three main parameters: $n = kN$, where $N$ is the polynomial ring dimension, $k$ is the number of random elements of a ciphertext, and $n$ is the length of the secret key; $q$, cardinality of the set that the polynomials are defined over; and $\sigma$, the statistical parameter of the noise, e.g., its standard deviation. Given these parameters, it is known per se how to estimate a degree of security that is provided, see, e.g., M, Albrecht et al., "On the concrete hardness of Learning with Errors", Journal of Mathematical Cryptology, 9(3):169-203, 2015 .

In embodiments herein, the parameters of TFHE-like LINE-and GLWE-based ciphertexts that are used may be selected based on a desired security level and based on a desired accuracy of operations such as linear combination of LWE ciphertexts and/or applying a programmable bootstrapping, in other words, a noise level resulting from applying these operations. Interestingly, in the TFHE setting, security parameters may be selected independently of the computational complexity, e.g. independently of the multiplicative depth of the computation. This is unlike for non-TFHE-like schemes, where the security parameters are typically chosen to limit or eliminate bootstrappings.

In particular, LWE-based ciphertexts and/or GLWE-based ciphertexts used in the TFHE setting herein may use a relatively small modulus, e.g., of at most 32 bits, at most 64 bits, or at most 128 bits. This modulus is typically selected independent from the computation to be carried out, e.g., it is selected depending on a desired precision and/or efficiency. Parameters $N$, $k$, and/or $a$ may be selected to achieve a desired security level, also typically independently from the computation to be carried out. For example, $N$ may be set to at least 512 and/or at most 2048 or 4096, e.g., to 1024. For example, in an embodiment, RLWE is used with $N$ at least 512 and/or at most 2048 or 4096, e.g., 1024, and $k = 1$. Such values for $N$ are not typically used in non-TFHE-like encryption schemes, where such values would severely restrict the computations that can be performed; instead, in non-TFHE-like schemes, $q$ and $N$ are typically both selected based on the desired security level, such that $q$ may be much larger.

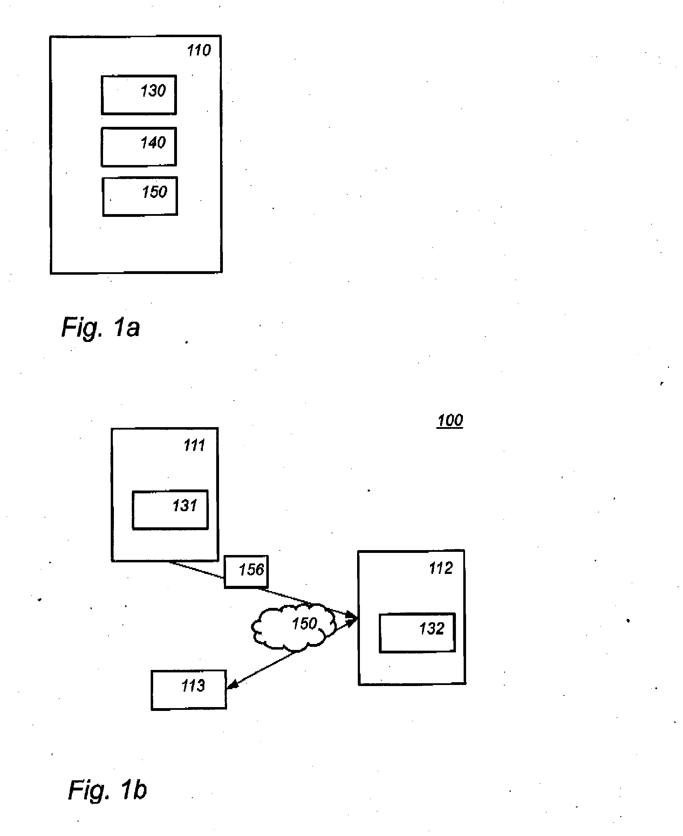

Fig. 1a schematically shows an example of an embodiment of a device 110 for use in an encrypted computation, for example, for computing a representation of ciphertext, or for performing an encrypted computation using such a ciphertext.

Device 110 may comprise a processor system 130, a storage 140, and a communication interface 150. Storage 140 may comprise local storage, e.g., a local hard drive or electronic memory. Storage 140 may comprise non-local storage, e.g., cloud storage. In the latter case, storage 140 may comprise a storage interface to the non-local storage. For example, storage 140 may be for storing a plaintext to encrypt, and/or data representing a ciphertext that encrypts the plaintext. Such a ciphertext may comprise one or more random mask polynomials, and a body polynomial that is derived from the mask polynomials and the plaintext. The ciphertext may be stored in the storage 140 in the form of a seed of a pseudo-random number generator and a Fourier-domain representation of the body polynomial, as discussed in more detail elsewhere.

Device 110 may communicate internally, with other devices, external storage, input devices, output devices, and/or one or more sensors over a computer network. The computer network may be an internet, an intranet, a LAN, a WLAN, etc. The computer network may be the internet. The device may optionally comprise connection interface 150 which is arranged to communicate with other devices as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. Communication, e.g., internal communication, may use other communication protocols or media, e.g., an internal data bus.

In device 110, the communication interface 150 may be used to send or receive digital data. For example, device 110 may be configured to receive or send the data representing the ciphertext, e.g., the seed and the Fourier-domain represented body polynomial. E.g., the device may be configured to generate and send the data, or to receive the data and use it in an encrypted computation, e.g., as part of a bootstrapping key.

The execution of device 110 may be implemented in a processor system 130, e.g., one or more processor circuits, e.g., microprocessors, examples of which are shown herein. Device 110 may comprise multiple processors, which may be distributed over different locations. For example, device 110 may use cloud computing.

Device 110 may be used to compute a representation of a ciphertext from a stored plaintext, in which case processor system 130 may be configured to generate the ciphertext. To this end, processor system 130 may be configured to obtain a seed for a pseudo-random number generator, Processor system 130 may be further configured to randomly generate the mask polynomials by using the pseudo-random number generator according to the seed to generate representations of the mask polynomials in a Fourier domain of a number-theoretic transform. Processor system 130 may be further configured to apply an inverse of the number-theoretic transform to the evaluations of the mask polynomials to determine coefficients of the mask polynomials. Processor system 130 may be further configured to, using the plaintext, determine coefficients of the body polynomial such that the ciphertext encrypts the plaintext. Processor subsystem 130 may be further configured to apply the number-theoretic transform to the coefficients of the body polynomial to determine a representation of the body polynomial in the Fourier domain. Processor system 130 may be further configured to output the representation of the ciphertext. The representation may comprise the seed and the representation of the body polynomial in the Fourier domain. For example, the representation may be output by storing it on storage 130 and/or sending it to another party via communication interface 150.

As an alternative to computing the representation, device 110 may be used to use such a representation to perform an encrypted computation. In this case, processor system 130 may be configured to obtain respective multiplicand polynomials by which to multiply the mask polynomials and the body polynomial, for example, as a result of previous operations of the encrypted computation that is being carried out. Processor system 130 may be further configured to expand the stored data representing the ciphertext. The stored data may comprise a seed of a pseudo-random number generator and a representation of the body polynomial in a Fourier domain of a number-theoretic transform. The expanding may comprise using the pseudo-random number generator according to the seed to generate representations of the mask polynomials in the Fourier domain. Processor system 130 may be further configured to compute polynomial products of the mask polynomials and the body polynomial by the respective multiplicand polynomials. The polynomial products may be computed in the Fourier domain, resulting in representations of the computed polynomial products in the Fourier domain. Processor system 130 may be further configured to output the computed polynomial products, for example, for use in a remainder of the encrypted computation.

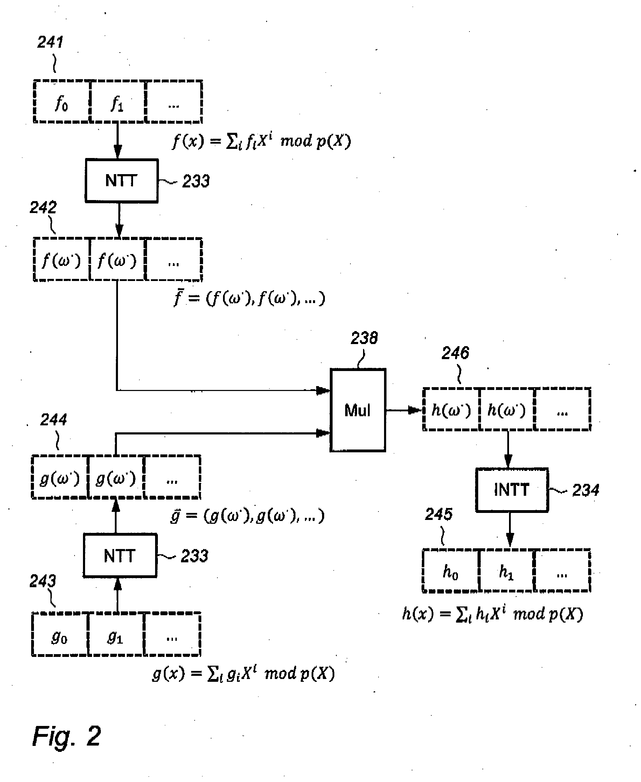

Some of the figures show functional units that may be functional units of the processor system. For example, a figure may be used as a blueprint of a possible functional organization of the processor system. The processor circuit(s) are not shown separate from the units in most figures. For example, the functional units shown in figures 2, 3a, 3b, 4a and 4b (see below) may be wholly or partially implemented in computer instructions that are stored at a device such as device 110, e.g., in an electronic memory of device 110, and are executable by a microprocessor of device 110. In hybrid embodiments, functional units are implemented partially in hardware, e.g., as coprocessors, e.g., arithmetic and/or cryptographic coprocessors, and partially in software stored and executed on device 110.

For example, device 110 may be a device for performing an encrypted computation. The encrypted computation may use homomorphic encryption cryptography. For example, the device 110 may be used to perform an encrypted computation, e.g., the device may perform the computation even though said data is received in encrypted form, e.g., from a data-provider, and even though the device 110 is not able to decrypt the data. The computation may involve the multiplication of a ciphertext by respective polynomials as described herein, for example, as part of a programmable bootstrapping.

For example, storage 140 may store encrypted data items, e.g., received from one or more data-providers or generated as intermediate results or end results, e.g., outputs, of the computation. Typically, most or all data items on which the computation of device 110 is performed, are encrypted with a key (or keys) that is not known to device 110 that is device 110 may not be configured to obtain the plain data items corresponding to the encrypted data items, e.g., such as stored in storage 140. The decryption key in plain form is secret for device 110, though the encryption/decryption key may be available in encrypted form. For example, the processor system may be configured to perform a sequence of homomorphic encryption operations, which may include arithmetic operations on encrypted values such as addition and multiplication, but may also include arithmetic operations on encrypted polynomials. Homomorphic operations may also include operations like a key switching, a bootstrap, and the like.

Fig. 1b schematically shows an example of an embodiment of an encrypted computation system 100. System 100 is configured for performing an encrypted computation using homomorphic encryption, e.g., fully homomorphic encryption.

The system 100 in this example comprises a key generation device 111, a data-provider device 160 and an encrypted computing device 112. Key generation device 111 and data provider device 160 may be combined in a single device. Device 112 may be configured to receive encrypted data items from a data-provider 160. At least one or more data items may be received in encrypted form. One or more data items may be received in plain format. The computation is run on the received data items and possibly also on stored data items. Interestingly, the computation may be performed on the encrypted data, without decrypting the data, e.g., without converting encrypted data items to data in a plain format.

The devices 111 and/or 112 in this example may each be based on device 110 of Fig. 1a, e.g., may each comprise processor system 130, storage 140, and/or communication interface 150 of Fig. 1a.

In this example, device 111 comprises a key generation unit 131, e.g., implemented by a processor system of the device 111. Key generation unit 131 is configured to generate a bootstrapping key 156 for use by encrypted computing device 112. The bootstrapping key 156 may comprise multiple GLWE-type ciphertexts. The key generation unit 131 may be configured to generate these ciphertexts to determine the bootstrapping key 156, using the techniques provided herein. Device 111 may provide the bootstrapping key 156 to device 112, e.g., send it via computer network 150, upload it to a shared storage, etc.

In this example, device 112 comprises an encrypted computation unit 132, e.g., implemented by a processor system of the device 112. Encrypted computation unit 132 may be configured to carry out the encrypted computation. The encrypted computation may involve a bootstrapping, in particular, a programmable bootstrapping, of an encrypted value. To perform the bootstrapping, the encrypted computation unit 132 may use the bootstrapping key 156 that it has obtained from device 111, e.g., received via network 150 or retrieved from a shared storage. The bootstrapping may involve multiplying the mask and body polynomials of a GLWE-based ciphertext of the bootstrapping key 156 by respective multiplicand polynomials. The encrypted computation unit may carry out these multiplications as described herein. The encrypted computation may comprise many other operations, as known per se, e.g., device 112 may be configured to evaluate an arithmetic circuit, to evaluate a neural network on encrypted data, etc.

Although not shown in this figure, the encrypted computation system 100 may comprise multiple encrypted computing devices, e.g., two, three or more than three. The encrypted computation may be distributed among the multiple encrypted computing devices. The encrypted computing devices may exchange intermediate computation results, typically encrypted, among each other. Each encrypted multiplication device may be implemented like encrypted computing device 112, and may perform multiplications of ciphertexts by polynomials as described herein.

Homomorphic encryption schemes can be applied in many settings. For example, encrypted computing device 112 may be operated by a cloud provider. The cloud provider may offer computation and storage services to its clients. By employing homomorphic encryption, data provider device 160 of Fig. 1b, e.g., a client of the cloud provider, can send their data in encrypted form. The cloud provider can still perform the required computations, and/or the required storage, but is not able to know the corresponding to plain data. For example, data provider device 160 may use an encryption key of a type corresponding to the particular homomorphic encryption system used to encrypt the data items. When computations results are received by data-provider 160 from encrypted computing device 112, a corresponding decryption key may be used to decrypt the encrypted data items. Encryption and decryption keys may be the same-and typically are so.

For example, encrypted computation system 100 may be configured to train machine-learning models, e.g., image classifiers, e,g., medical models, without the encrypted computing devices having access to the plain data items. For example, linear regression may be performed on the input data, possibly, even without bootstrapping. For example, back-propagation may be performed on the input data, possibly, with bootstrapping. The resulting model parameters may be returned to an entity who is in possession of the decryption key. This enables multiple providers of medical data to pool their data, by sending the data to a cloud provider. The cloud provider then returns the model parameters, without ever having access to the plain data. Encryption keys may be equal to decryption keys.

After the model is trained, the encrypted computation system 100 may be used to offer the model, say, for use with medical data. This can be done with plain model parameters or encrypted model parameters-in both cases with encrypted data, e.g., encrypted input, intermediate and output data. Using plain model parameters is usually much more efficient. In both cases,an effect of the system is that a computation is performed, say an image classification, e.g., a medical image classification, without the computer knowing the plain data items. For example, a mammogram may be evaluated for cancer, without the image ever being in the plain at an encrypted computing device 112 and without any encrypted computing device 112, or a coalition of such devices, knowing what the outcome of the cancer evaluation is. From a privacy point of view it may be acceptable to operate a plain model on encrypted privacy sensitive data, while it might not be acceptable to operate on plain privacy sensitive data.

Other applications involve database services, e.g., looking up encrypted data in an encrypted database; for example, the computation may be a comparison between an input item and a database item. For example, multiple computations may be combined to produce a database index that matches an index. For example, the database, may be a genomic database, and the input a gene sequence. For example, system 100 may be used for protected control of a device. For example, a device, even a large device such as a power plant, may send sensor values to an encrypted computing device 112, and receive encrypted control signals in return. The control signals being computed from the sensor signals. An attacker of the system may be able to determine the contents of data going to and from one or more encrypted computing devices 112, or even gain access to intermediate data of these devices, but he will not be helped by that as the data is encrypted. Even a full break of all encrypted computing devices 112 of a system 100 will not reveal the data, as the decryption key is not known to these devices. Computing the control signal may involve such mathematical operations as linear algebra, averages, matrix multiplication, polynomial evaluations, and so on, all of which are possible to execute with homomorphic encryption operations.

For example, a pool of encrypted data items may be maintained in the encrypted computation system; a subset of these may be received and another subset may be the result of an encrypted computation, e.g., intermediate results. For example, an encrypted computing device 112 may be configured to apply a homomorphic encryption operation to one, two or more encrypted data items in a pool, e.g., a collection of input and/or intermediate and/or output values. The result may be a new encrypted data item that may be stored in the pool. The pool may be stored in a storage of the encrypted computation system. This may be local storage or a distributed storage. In the latter case, it may happen that one or more encrypted data items are represented multiple times in the pool. Encrypted data items may be sent from one computing device to another, e.g., if their values are needed elsewhere. The pool may be implemented in various ways, e.g., as a register file, an array, various data structure, and so on.

The encrypted data items may represent all kinds of data. For example, encrypted data items may represent numbers that need to be averaged, or which are used for linear regression, etc. For example, the encrypted data items may represent an image. For example, each pixel of the image may correspond to one or more encrypted data items. For example, a grey-scale pixel may be represented by a grey level, which in turn may be represented by a single encrypted data item. For example, 256 grey levels may be encoded in a single encrypted data item. For example, a colour pixel may be represented as multiple colour levels, e.g., RGB levels, which in turn may be represented by a tuple of encrypted data items. For example, three 256-level colours may be encoded in three encrypted data items. How many encrypted data items are used to represent a type of data depends on the capacity of the homomorphic encryption scheme. For example, more restrictive homomorphic encryption schemes may only be capable of encoding one bit per encrypted data item. In that case, one colour pixel, may require 24 encrypted data items.

A set of homomorphic encryption operations may be defined for the computation. For example, from the homomorphic encryption operations a network or circuit of operations may be built that together implement the computation, e.g., by an external compiler device or by the computation device itself. For example, the operations may include Boolean operations. The way the homomorphic encryption operations are combined, e.g., which operation is applied to which operand in the pool, determines the computation that is being performed. For example, the computation may be represented as a list of homomorphic encryption operations that are to be performed together with an indication on which encrypted data item they are to be performed. The network or circuit may indicate to the encrypted computation device 112 when to carry out a programmable bootstrapping, or the encrypted computation device 112 may initiate the programmable bootstrapping when it finds that a noise of an encrypted value is or will become too large.

Fig. 2 schematically shows an example of an embodiment of a method of computing a polynomial product of two polynomials $f(X)$ and $g(X)$. The two polynomials in this example are defined modulo a quotient polynomial $p(X)$.

Several examples described with respect to this figure are known per se and described e.g. in Chapter 6 of J. von zur Gathen and J. Gerhard, "Modern Computer Algebra", Cambridge University Press, 2003. This figure shows a multiplication of polynomials in coefficient form, resulting in a product of the polynomials in coefficient form. This multiplication has several components: a number-theoretic transform, an inverse of the number-theoretic transform, and a Fourier domain multiplication. Various embodiments of other figures may use the components of this figure, but in a different configuration.

The figure shows the two polynomials $f$, 241 and $g$, 243, represented in the coefficient domain, e.g., by respective values for the coefficients $f_i$ of $f(X) = \sum_i f_i X^i$ mod $p(X)$ and $g_i$ of $g(X) = \sum_i g_i X^i$ mod $p(X)$.

To multiply the polynomials, a number-theoretic transform NTT, 233, may be applied to convert the polynomials into a Fourier domain. The figure shows Fourier-domain representation 242 of polynomials 241 and Fourier-domain representation 244 of polynomial 243. Typically, a Fourier-domain representation of the polynomial 241, 243 comprises evaluations of the polynomial in powers of a primitive root of unity from a finite ring, e.g., the ring from which the coefficients of the polynomials 241, 243 are selected or to which they correspond. As demonstrated by the examples below, the Fourier-domain representations can comprise all $M$ powers of a $M$th primitive root of unity, for example, or only a strict subset of the powers. In some examples, there is a one-to-one correspondence between coefficient representations 241 of polynomials mod $p(X)$ and Fourier representations 242, but this is not needed, e.g. the NTT 233 may map sets of coefficients to a subset of possible Fourier representations 242.

Given the Fourier-domain representations 242, 244, the polynomial product of the polynomials may be computed in an operation Mul, 238, in the Fourier domain. This is typically implemented as a pointwise multiplication of the evaluations of the polynomials. The pointwise multiplications may correspond to respective multiplications modulo a polynomial $X^M - 1$ for a value $n$ that corresponds to the quotient polynomial, as highlighted in the examples below. As a result, a Fourier domain representation 246 of the product of the polynomials $f$ and $g$ may be obtained, e.g., as evaluations of the quotient polynomial in the set of powers of the primitive root of unity.

An inverse INTT, 234, of the number theoretic transform 233 may be applied to the Fourier domain representation 246 of the product polynomial to obtain a representation 245 of the product polynomial in coefficient form $h(X) = \sum_i h_i X^i$ mod $p(X)$. Interestingly, INNT 234 may have the property that randomly generating a Fourier representation, e.g., randomly generating the respective evaluations comprised in it, and then applying the inverse number-theoretic transform 234, results in a random polynomial 245, e.g., having the same distribution as randomly generating the respective coefficients $h_i$. This may be the case in particular when there is 1-to-1 mapping between Fourier domain representations 246 and coefficient representations 245, e.g., when the Fourier domain representation comprises an equal number of elements as the number of coefficients of the polynomial, e.g., equal to the degree of the quotient polynomial. As shown in the examples below, this can also be the case when the Fourier domain representation is larger, e.g., the number of Fourier-domain representations 246 mapping to a given polynomial 245 mod $p(X)$ in coefficient representation may for each polynomial 245 be the same.

Generally, various number-theoretic transforms are known per se and can be used in combination with the techniques described herein, e.g., the Discrete Fourier Transform as in its standard form; Schönhage's algorithm and Nussbaumer's algorithm.

Several particular examples are now provided of number-theoretic transforms and their corresponding Fourier domain representations. Generally, these examples relate to polynomials over finite rings or tori. A correspondence between random polynomials and random Fourier domain representations may be present, as exemplified below. On the other hand, when using the classical Fourier transform instead of the number-theoretic transform as in TFHE schemes such as "TFHE: fast fully homomorphic encryption over the torus", the infinite-size field $R = \mathbb{C}$ of complex numbers is used instead of a finite set. In such case, such a correspondence is not present in a concrete implementation as ciphertexts have a finite representation.

Example 1: Quotient polynomial $X^M - 1$

Generally, let $R$ be a ring. Let also $\omega \in R$ be a primitive $M$-th root of unity for an integer $M > 1$. Given two polynomials $f, g \in R[X]/(X^M - 1)$, their product can be computed thanks to the number-theoretic transform, also known as the discrete Fourier transform. Details can be found in Chapter 8 of "Modern Computer Algebra".

When applying the number-theoretic transform, a polynomial $f := f(X) = f_0 + f_1 X + ... + f_{M-1} X^{M-1} \in R[X]$ of degree $< M$ may be identified with its coefficient vector $(f_0, f_1, ..., f_{M-1}) \in R^M$. The number-theoretic transform 233 of polynomial $f$, viewed as a vector of $R^M$, may compute a vector comprising evaluations of $f$ at the successive powers of $\omega$:

$$\mathrm{DFT}_\omega : R^M \xrightarrow{\sim} R^M, f \mapsto \mathrm{DFT}_\omega(f) = (f(\omega^j))_{0 \le j \le M-1}.$$

Moreover, for two polynomials $f, g \in [X]$ of degree $< n$, it holds that:

$$\mathrm{DFT}_\omega(f * g) = \mathrm{DFT}_\omega(f) \cdot \mathrm{DFT}_\omega(g)$$

where * denotes the polynomial convolution and - denotes the point-wise multiplication of vectors, see Lemma 8.11 of "Modern Computer Algebra".

Consider now polynomials $f, g \in R[X]/(X^M - 1)$ (and thus of degree $< M$). Since multiplication modulo $X^M - 1$ is a convolution (e.g., $f g \equiv f * g \pmod{X^M - 1}$), the product $h := f g \in [X]/(X^M - 1)$ can be obtained as

$$h = \mathrm{DFT}_\omega^{-1}(\mathrm{DFT}_\omega(f) \cdot \mathrm{DFT}_\omega(g))$$

where $\mathrm{DFT}_\omega^{-1}$ denotes the inverse number-theoretic transform 234 and $\mathrm{DFT}_\omega(f)\,\mathrm{DFT}_\omega(g)$ is the pointwise multiplication Mul, 238. Interestingly, the inverse DFT may be computed as $\mathrm{DFT}_\omega^{-1}(h) = \frac{1}{M}\mathrm{DFT}_{\omega^{-1}}(h)$ for any polynomial $h \in R[X]$ of degree $< M$, see Theorem 8.13 of "Modern Computer Algebra".

In this example, when ring R is finite, there is a one-to-one correspondence between polynomials and their Fourier domain representations, $R[X]/(X^M - 1) \cong R^M$. Thus, uniformly random polynomials may correspond to uniformly random Fourier domain representations.

Example 2: Quotient polynomial $p(X) | X^M - 1$

In this example, the quotient polynomial $p := p(X)$ may be any polynomial $p(X)$ dividing $X^M - 1$. Again, $\omega \in R$ may be a primitive $M$-th root of unity. In this case, the product of two polynomials $f, g \in R[X]/(p)$ can be obtained by:

- performing NTT 233 as in the above example, $f$ and $g$ are viewed as polynomials in $R[X]/(X^M - 1)$;
- performing Mul 238 as in the above example, computing a Fourier representation of $h' := f g \pmod{X^M - 1}$ as $h' = \mathrm{DFT}_\omega^{-1}(\mathrm{DFT}_\omega(f) \cdot \mathrm{DFT}_\omega(g))$
- performing INTT 234 by computing a coefficient representation of $h'$ as above, and returning $h = h' \bmod p$ as the product of $f$ and $g$ in $R[X]/(p)$.

It is not necessary to perform the reduction $h = h' \bmod p$ in INNT 234, e.g., coefficients modulo the polynomial $X^M - 1$ may be returned. In this case, for security purposes, it can be desirable to add a random multiple $r(X)p(X)$ of the quotient polynomial to the returned coefficient representation to randomize it.

Moreover, it is noted that, when performing the NTT 233 on polynomials $f, g$, it is possible to add random multiples of the quotient polynomial to $f$ and/or $g$ to randomize the obtained Fourier domain representations 242, 243.

In this example, $p(X)$ may be a strict divisor of $X^M - 1$, e.g., may have degree. smaller than $M$, but also $p(X) = X^M - 1$ may be considered as an example of this case.

Denoting the degree of $p(X)$ as $N$, the coefficient representation of a polynomial may comprise $N$ elements, whereas the Fourier domain representation may comprise $M$ elements. For $M = N$, there is a one-to-one mapping between Fourier domain representations and coefficient representations of polynomials modulo $p(X)$. If $M > N$, there a one-to-one mapping between Fourier domain representations and polynomials mod $(X^M - 1)$, but not between Fourier domain representations and polynomials mod $p(X)$. Interestingly, however, the operation $h = h' \bmod p$ in INTT 234 may guarantee that each coefficient representation 245 of a polynomial mod $p(X)$ has an equal number of Fourier domain representations 246 corresponding to it.

In the examples below, quotient polynomials of the form $(X^M - 1)/(X^d - 1)$ are discussed, where $M = hd$ and $d = M - N$. As above, in the examples below R may be finite and $\omega$ may be a primite $M$th root of unity. Although for such quotient polynomials, the techniques of the above example can be used, interestingly, also a more efficient polynomial multiplication is possible, by defining a Fourier representation that comprises evaluations in only a subset of the powers of a primitive nth root of unity. This is demonstrated below for the case $h = 2$ and $h = 3$, but this example readily generalizes to higher values of $h$. The size reduction of the Fourier representation is larger the smaller the value of $h$ however, which is why the cases $h = 2$ and $h = 3$, and especially $h = 2$, are preferred.

Example 3: $M = 2N, p(X) = X^N + 1$

Given $f, g \in R[X]/(X^N + 1)$, write $f(X) = \sum_{j=0}^{N-1} f_j X^j$ with $f_j \in R$ and $g(X) = \sum_{j=0}^{N-1} g_j X^j$ with $g_j \in R$. Define $f'(X) = f(\omega X)$ and $g^*(X) = g(\omega X)$, From $(\omega X)^N + 1 = -X^N + 1$, it may be seen that:

$$f^*(X) \bmod (X^N - 1) = f_0 + f_1 \omega X + \cdots + f_{N-1} \omega^{N-1} X^{N-1}$$
$$= \sum_{j=0}^{N-1} f_j^* X^j \quad \text{with } f_j^* = f_j \omega^j \in R.$$

Similarly, $g^*(X) \bmod (X^N - 1) = \sum_{j=0}^{N-1} g_j^* X^j$ with $g_j^* = g_j \omega^j \in R$. It may be noted that $\eta := \omega^2 \in$ is a primitive $N$-th root of unity. Since multiplication modulo $X^N - 1$ is a convolution (and thus $f^* g^* \equiv f^* * g^* (\bmod X^N - 1)$), the product $h^* := f^* g^*$ can be obtained as:

$$h^* = \mathrm{DFT}_\eta^{-1}(\mathrm{DFT}_\eta(f^*) \cdot \mathrm{DFT}_\eta(g^*))$$

where

$$\mathrm{DFT}_\eta : R^N \xrightarrow{\sim} R^N, f^* \mapsto \mathrm{DFT}_\eta(f^*) = (f^*(\eta^j))_{0 \le j \le N-1}.$$

Letting $h^*(X) = \sum_{j=0}^{N-1} h_j^* X^j$, the product polynomial $h := f g \in R[X]/(X^N + 1)$ is then given by

$$h(X) = \sum_{j=0}^{N-1} h_j X^j \quad \text{with } h_j = h_j^* \omega^{-j} \in R.$$

Accordingly, in this example, the NTT operation 233 may be implemented as an operation $\overline{\mathrm{DFT}}_\omega$ taking as input a polynomial 241 in $R[X]/(X^N + 1)$ and returning its Fourier representation 242. Given $f \in R[X]/(X^N + 1)$, this operation 233 may be implemented as $\overline{\mathrm{DFT}}_\omega(f) = \mathrm{DFT}_\eta(f^*)$ where $\eta = \omega^2$, e.g.:

$$\overline{\mathrm{DFT}}_\omega : R^N \xrightarrow{\sim} R^N, f \mapsto \overline{\mathrm{DFT}}_\omega(f) = (f(\omega^{2j+1}))_{0 \le j \le N-1}.$$

The inverse operation 234 may be denoted $\overline{\mathrm{DFT}}_\omega^{-1}$, with multiplication operation 238 corresponding to the computation of $\mathrm{DFT}_\eta(f^*) \cdot \mathrm{DFT}_\eta(g^*)$.

It may be noted that, in this example, there is a one-to-one correspondence between coefficient representations 241, 243, 245 and Fourier domain representations 242, 244, 246: $R[X]/(X^N + 1) \cong R^N$. In particular, uniformly random Fourier domain representations correspond to uniformly random polynomials.

Example 4: $M = 3N/2$ ($N$ even), $p(X) = X^N + X^{N/2} + 1$

Given $f, g \in R[X]/(X^N + X^{N/2} + 1)$, write $f(X) = \sum_{j=0}^{N-1} f_j X^j$ with $f_j \in R$ and $g(X) = \sum_{j=0}^{N-1} g_j X^j$ with $g_j \in R$. For $i \in \{1,2\}$, define $f_i^*(X) = f(\omega^i X)$ and $g_i^*(X) = g(\omega^j X)$. Noting that $\omega^M - 1 = (\omega^{N/2} - 1)(\omega^N + \omega^{N/2} + 1) = 0$, it follows that $\omega^N + \omega^{N/2} + 1 = 0$, since $\omega$ is a primitive $(3N/2)$-th root of unity, and polynomial $X^N + X^{N/2} + 1$ can be expressed as $X^N + X^{N/2} + 1 = (X^{N/2} - \omega^{N/2})(X^{N/2} - \omega^N) = ((\omega^2 X)^{N/2} - 1)((\omega X)^{N/2} - {}_1)$. Hence, it may be seen that:

$$f_1^*(X) \bmod (X^{N/2} - 1)$$
$$= f_0 + f_1\omega X + \cdots + f_{N-1}\omega^{N-1} X^{N-1} \bmod (X^{N/2} - 1)$$
$$= \sum_{j=0}^{N/2-1} f_{1,j}^* X^j \quad \text{with} f_{1,j}^* = f_j\omega^j + f_{N/2+j}\omega^{N/2+j} \in R$$

and

$$f_2^*(X) \bmod (X^{N/2} - 1)$$
$$= f_0 + f_1\omega^2 X + \cdots + f_{N-1}(\omega^2)^{N-1} X^{N-1} \bmod (X^{N/2} - 1)$$
$$= \sum_{j=0}^{N/2-1} f_{2,j}^* X^j \quad \text{with} f_{2,j}^* = f_j\omega^{2j} + f_{N/2+j}\omega^{N+2j} \in R.$$

Similarly, we have

$$g_1^*(X) \bmod (X^{N/2} - 1) = \sum_{j=0}^{N/2-1} g_{1,j}^* X^j$$

with

$$g_{1,j}^* = g_j\omega^j +$$

$$g_{N/2+j}\omega^{N/2+j} \in R$$

and

$$g_2^*(X) \bmod (X^{N/2} - 1) = \sum_{j=0}^{N/2-1} g_{2,j}^* X^j$$

with

$$g_{2,j}^* = g_j\omega^{2j} +$$

$$g_{N/2+j}\omega^{N+2j} \in R.$$

Let $\eta := \omega^3$, which is a primitive (N/2)-th root of unity. For i $\in$ {1,2},

$$h_i^* :=$$

$$f_i^* g_i^* \bmod (X^{N/2} - 1)$$

may be computed as:

$$h_i^* = \mathrm{DFT}_\eta^{-1}(\mathrm{DFT}_\eta(f_i^*) \cdot \mathrm{DFT}_\eta(g_i^*)).$$

Polynomials $h_i = f_i g_i \bmod ((\omega^{3-1}X)^{N/2} - 1)$ may be recovered as:

$$h_i(X) = \sum_{j=0}^{N/2-1} h_{i,j} X^j \quad \text{with } h_{i,j} = h_{i,j}^*(\omega^i)^{-j} \in R$$

for $i \in \{1,2\}$. Applying the Chinese remainder theorem can yield the product polynomial $h := fg \in R[X]/(X^N + X^{N/2} + 1)$ as

$$h(X) = h_1(X) + (\omega^N X^{N/2} - 1)\left(\frac{1}{\omega^{N/2} - 1}(h_2(X) - h_1(X))\bmod(\omega^{N/2} X^{N/2} - 1)\right).$$

Accordingly, in this case, the number-theoretic transform operation 233 may be implemented as $\overline{\mathrm{DFT}}_\omega$, taking as input a polynomial 241, 243 in $R[X]/(X^N + X^{N/2} + 1)$ and returning its Fourier representation 242, 244. For example, given $f \in R[X]/(X^N + X^{N/2} + 1)$, the Fourier representation may be computed as

$$\overline{\mathrm{DFT}}_\omega(f) := (\mathrm{DFT}_\eta(f_1^*), \mathrm{DFT}_\eta(f_2^*))$$

where $\eta = \omega^3$; or, equivalently,

$$\overline{\mathrm{DFT}}_\omega : R^N \overset{\sim}{\to} R^N , f \mapsto \overline{\mathrm{DFT}}_\omega(f) = \left(\left\{f(\omega^{3j+1})\right\}_{0\leq j\leq N/2-1}, \left\{f(\omega^{3j+2})\right\}_{0\leq j\leq N/2-1}\right).$$

The inverse operation 234 may be denoted $\overline{\mathrm{DFT}}_\omega^{-1}$, with multiplication 238 being implemented as $\mathrm{DFT}_\eta(f_i^*) \cdot \mathrm{DFT}_\eta(g_i^*)$, $i = 1,2$.

Also in this example it may be noted that there is a one-to-one correspondence between coefficient representations 241, 243, 245 and Fourier domain representations 242, 244, 246: $R[X]/(X^N + X^{N/2} + 1) \cong R^N$. In particular, uniformly random Fourier domain representations correspond to uniformly random polynomials.

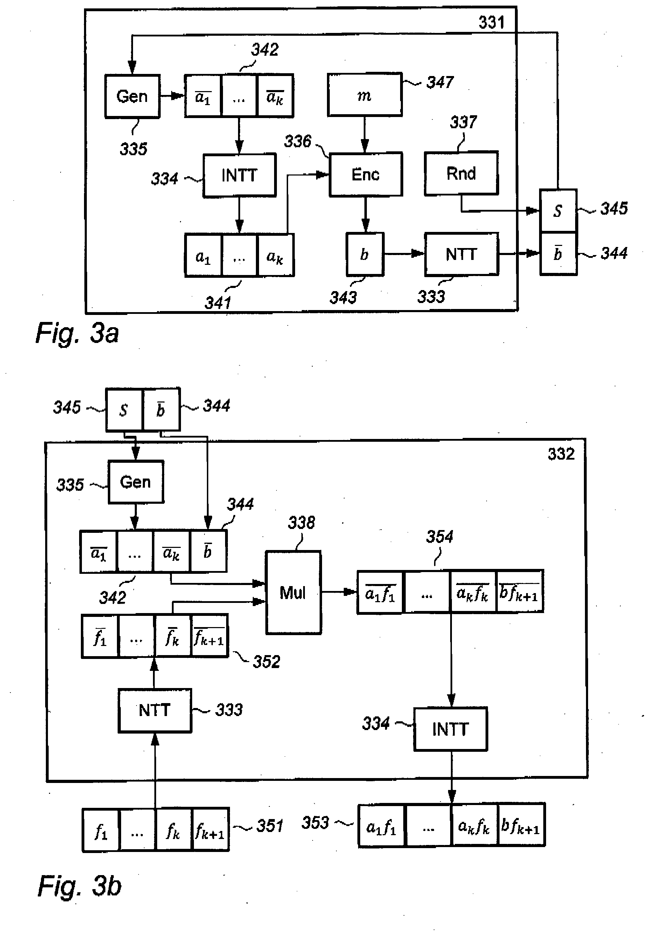

**Fig. 3a** schematically shows an example of an embodiment of an encryption unit 331 for computing a representation 344-345 of a ciphertext by encrypting a given plaintext. For example, the encryption unit 331 may be used in a key generation unit 131 of a key generation device 111 or in another encrypted computation device 110.

The ciphertext may comprise one or more mask polynomials and a body polynomial. For example, the ciphertext may be a GLWE-based ciphertext. The computed representation 344-345 may be for use in an encrypted computation method, e.g., as discussed with respect to Figs. 1b, 3b, 4a, and 4b. As also discussed elsewhere, such an encrypted computation method may involve multiplying the mask and body polynomials by respective multiplicand polynomials. As demonstrated in the example of Fig. 2, such polynomial multiplications may be performed efficiently, if the mask and body polynomials are represented in the Fourier domain of a number-theoretic transform. Accordingly, it is desirable to provide a representation of the ciphertext that is compressed, yet can be expanded efficiently to such a Fourier-domain representation, while still ensuring that the ciphertext respects the probability distribution of the encryption scheme. Such a representation may be provided by encryption unit 331.

Shown in the figure is a plaintext $m$, 347, to encrypt. The plaintext may be a polynomial from the polynomial ring in which the mask and body polynomials are defined. For example, the plaintext may be an encoding of one or more numbers, bits, characters, strings, etc., as a polynomial.

The figure also shows an encryption unit Enc, 336. The encryption unit may take as inputs mask polynomials $a_1, ..., a_k$, 341 in coefficient form and the plaintext m, 347, and may determine a body polynomial b, 343. The encryption unit 336 may also take as input a secret key with which to encrypt the plaintext 347 (not shown in this figure). The encryption unit 336 may determine coefficients 343 of the body polynomial such that the ciphertext formed by the mask polynomials 341 and the body polynomial 343 encrypts the plaintext 347. The encryption unit 336 may be a conventional encryption unit. For example, the unit may compute $b = \sum_{j=1}^{k} s_j' \cdot a_j + \mu + e$, where $a_j$ are the mask polynomials, $s_j'$ are the secret key, $\mu$ is the plaintext and e is noise sampled according to an error distribution. While encryption unit 336 may be conventional, interestingly, the mask polynomials 341 are not generated in a conventional way, e.g., they are not generated by separately randomly generating respective coefficients.

Further shown is a seed 5, 346, of a pseudo-random number generator. The seed 345 may be included in the representation of the ciphertext that is being determined. As shown in the figure, the seed may be randomly generated by a random-number generator Rnd, 337, for example, a hardware random-number generator or a pseudorandom number generator (preferably, a cryptographic PRNG). However, the seed can also be obtained differently, e.g., the seed can be received from another device, or the seed can represent the state of the pseudo-random number generator after it has been previously used to generate other random numbers, for example.

Also shown is a pseudo-random number generator (PRNG) Gen, 335. PRNG 335 may be configured to, given the seed 345, determine a sequence of random values. The PRNG is preferably a cryptographic pseudo-random number generator (CPRNG). The PRNG may be used according to the seed 345 to randomly choose the mask polynomials by generating representations 342 of the mask polynomials in the Fourier domain of the number-theoretic transform, e.g., uniformly at random from the Fourier domain. For example, a representation of a mask polynomial may comprise a number of evaluations of the mask polynomial in a set of evaluation values. PRNG 335 may sequentially generate the respective evaluations. Examples of Fourier domain representation of number-theoretic transforms are discussed with respect to Fig. 2, for example. The PRNG may be used to sample the Fourier domain representation using techniques that are known per se, e.g., by sampling bits from the PRNG and a deriving a random evaluation from those bits, e.g., by rejection sampling. Any cryptographically secure pseudorandom number generator can be used, e.g., a stream cipher, a block cipher in counter model, the Yarrrow or Foruna PRNG, etc.

Also shown is a INTT unit 334. INNT unit 334 may be configured to apply an inverse of the number-theoretic transform (INTT) to the evaluations 342 of the mask polynomials to determine coefficients 341 of the mask polynomials, for example, as discussed with respect to Fig. 2. Interestingly, the inverse number theoretic transform may have the property that generating a uniformly random Fourier domain representation and applying the INNT leads to a uniformly random polynomial, in other words, a polynomial with uniformly random coefficients. For example, there can be a one-to-one mapping between Fourier domain representations 342 and coefficient representations 341 of the polynomials. Accordingly, generating 335 the Fourier domain representation and applying the INNT 334 may lead to mask polynomials with the same randomness characteristics as randomly generating respective coefficients of the mask polynomials as may be conventionally done.

The figure further shows an NTT unit 333. NTT unit 333 may be configured to apply the number-theoretic transform (NTT) to the coefficients 343 of the body polynomial to determine a representation 344 of the body polynomial in the Fourier domain, for example, as discussed with respect to Fig. 2. The Fourier domain representation 344 and the seed 345 may be used to represent the ciphertext. By storing the body polynomial in the Fourier domain, it can be directly used for Fourier-domain multiplication. It is also possible the store the body polynomial in coefficient form, in which case the translation to the Fourier domain may then be performed at the point where a multiplication is needed.

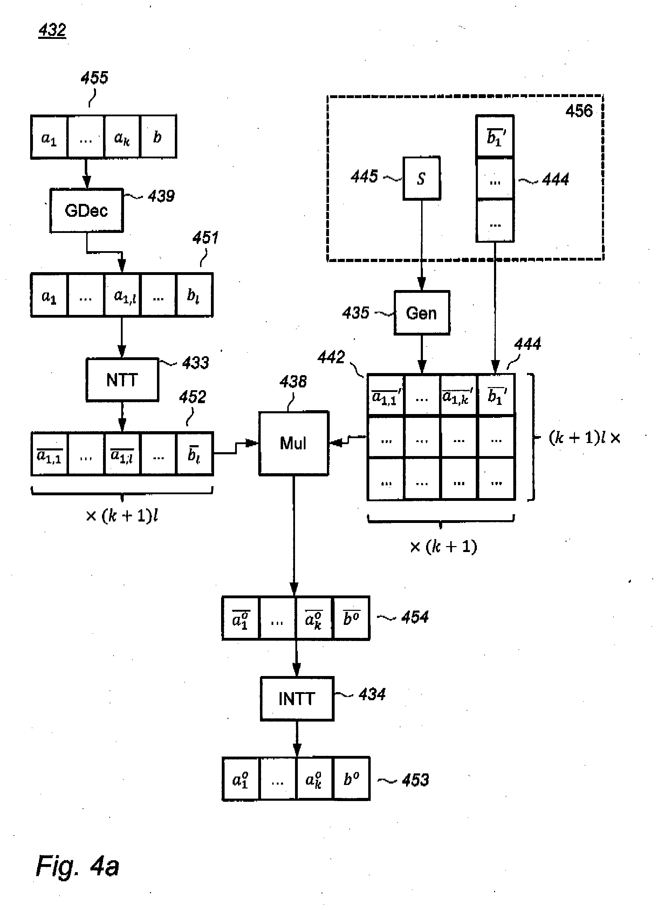

By repeatedly using the encryption unit 331, multiple ciphertexts may be generated. For example, encryption unit 331 may be used to generate a GGSW-type ciphertext that comprises multiple generated ciphertexts, as also discussed with respect to Fig. 4a. In such cases where multiple ciphertexts are generated, these ciphertexts can be based on the same seed 345, for example, a random seed generated by unit 337 or otherwise obtained may be used to initialize the PRNG 335 once, and the PRNG may then be used to generate mask polynomials 342 for the respective ciphertexts based on the same seed 345. The representations of the multiple ciphertexts in such a case thus share a common seed 345, that needs to be stored and/or transmitted only once when storing and/or transmitting the set of multiple ciphertexts, leading to a further reduction in storage and transmission bandwidth requirements.

A number of detailed examples are now given of determining representation 344-345. The examples describe the generation of encryptions representing a bootstrapping key, but can be readily adapted to the generation of encryptions representing any other values.

First example: quotient polynomial $X^N + 1$

This example is based on the corresponding example discussed with respect to Fig. 2. The polynomial to be represented may be an element of $\mathbb{T}_{N,q}[X] = (q^{-1}\mathbb{Z}/\mathbb{Z})[X]/(X^N + 1)$ or, using the associated ring, as an element of $(\mathbb{Z}/q\mathbb{Z})[X]/(X^N + 1)$. Let $R = \mathbb{Z}/q\mathbb{Z}$.

This example uses a primitive 2$N$th root of unity $\omega$. As discussed with respect to Fig. 2, in this case, a particularly efficient multiplication based on the number-theoretic transform is possible.

Modulus $q$ may be selected such that $\mathbb{Z}/q\mathbb{Z}$ contains such a root of unity. In particular, 2 may be a unit in R, so $q$ may be odd. Possible choices for R include prime fields $\mathbb{F}_q$ with $q \equiv 1 \pmod{2N}$. For example, the Solinas prime $q = 2^{64} - 2^{32} + 1$ may be used so that efficient 64-bit arithmetic can be used. More generally, $q$ may be selected such that $\lambda(q) \alpha 2N$, where A is Carmichael's totient function, and $\gcd(q, 2N) = 1$.

The following shows how encryption unit 331 may be used to generate a bootstrapping key for a TFHE programmable bootstrapping. Such a bootstrapping key may comprise GGSW-type ciphertexts of parts of the secret key. The GGSW-type ciphertexts themselves may be comprised of GLWE-based-encryptions indexed by ($i,r$) and encrypting respective values

$$(-s'_{h(r)})s_i \cdot \frac{q}{B^{b(r)}} \cdot$$

See Fig. 4a for details. The bootstrapping key may be generated according to the following procedure:

1, Generate a positive integer $q$ such that $\mathbb{Z}/q\mathbb{Z}$ has a 2$N$th primitive root of unity, and select such a 2$N$-th primitive root $\omega$ modulo $q$;

2. In Rnd operation 337, draw uniformly at random a common seed $\sigma$, 345 in (0,1)", where $\kappa$ is a security parameter;

3. In Gen operation 335, use cryptographic pseudo-random number generator

$$\mathrm{CPRNG}: \{0,1\}^\kappa \to ((\mathbb{Z}/q\mathbb{Z})^{kN})^{n \cdot (k+1)\ell}$$

to obtain n · $(k + 1)\ell$ vectors 342

$$(\hat{a}_{1,0}^{(i,r)}, \dots, \hat{a}_{1,N-1}^{(i,r)}, \dots, \hat{a}_{k,0}^{(i,r)}, \dots, \hat{a}_{k,N-1}^{(i,r)}) \in (\mathbb{Z}/q\mathbb{Z})^{kN}$$

for $1 \le i \le n$ and $1 \le r \le (k + 1)\ell$ as the output of CPRNG($\sigma$);

4. For $1 \le i \le n$ and $1 \le r \le (k + 1)\ell$:

- apply the inverse number-theoretic transform 334 to construct the polynomial mask $(a_1^{(i,r)}, \dots, a_k^{(i,r)})$, 341, where

$$a_j^{(i,r)} = \overline{\mathrm{DFT}}_\omega^{-1}(\hat{a}_{j,0}^{(i,r)}, \dots, \hat{a}_{j,N-1}^{(i,r)}) \in (\mathbb{Z}/$$

$$q\mathbb{Z})[X]/(X^N + 1)$$

for $1 \le j \le k$;
- obtain 336 the matching polynomial body

$$b^{(i,r)} = \sum_{j=1}^{k} s'_j \cdot a_j^{(i,r)} +$$

$$(-s'_{h(r)})s_i \cdot \frac{q}{B^{b(r)}} + e^{(i,i)} \in (\mathbb{Z}/q\mathbb{Z})[X]/(X^N + 1),$$

343, such that the ciphertext encrypts the plaintext

$$(-s'_{h(r)})s_i \cdot \frac{q}{B^{b(r)}} \cdot$$

347, where $e^{(i,j)}$ is a Gaussian error over $\mathbb{Z}[X]/(X^N + 1)$, and, by convention, $s'_{k+1} := -1$;
- compute

$$\hat{b}^{(i,r)} \leftarrow \overline{\mathrm{DFT}}_\omega(b^{(i,r)}) \in (\mathbb{Z}/q\mathbb{Z})^N,$$

344, by applying the number-theoretic transform 333:

5. Return the representation of the bootstrapping key, comprising the common seed $\sigma$, 345, and representations

$$\hat{b}^{(i,r)}$$

(with $1 \leq i \leq n$ and $1 \leq r \leq (k + 1)\ell$), 344, of the body polynomials.

Second example: quotient polynomial $X^N + X^{N/2} + 1$

This example is based on the corresponding example discussed with respect to Fig. 2. In this example, the body and mask polynomials are defined over $\mathbb{T}_N[X] = (q^{-1}\mathbb{Z}/\mathbb{Z})[X]/(X^N + X^{N/2} + 1)$, or using the associated ring, over $(\mathbb{Z}/q\mathbb{Z})[X]/(X^N + X^{N/2} + 1)$. Let $R = \mathbb{Z}/q\mathbb{Z}$ be the corresponding ring.

An advantage of using this quotient polynomial is that it can be used in combination with an even value of $q$, in particular, where $q$ is a power of two. This is advantageous for various cryptographic applications.

In this example, $q$ is selected such that 3 is a unit in $R$, The primitive root of unity $\omega$ is chosen as a primitive $(3N/2)$-th root of unity, e.g., with $N/2$ a power of three. As discussed with respect to Fig. 2, in this case a particularly efficient multiplication of polynomials in $R[X]/(X^N + X^{N/2} +1)$ using the number-theoretic transform is possible.

Using the notation of the previous example, a representation of a bootstrapping key may be generated as follows:

1. Select positive integer $q$ such that $R$ contains a primitive $(3N/2)$-th root of unity; $N$ even. Select a $(3N/2)$-th primitive root $w$ modulo $q$. For example, $q$ may be selected such that $\lambda(q) \propto 3N/2$, where $\lambda$ is Carmichael's totient function; and $\gcd(q,3N/2) = 1$.
2. In Rnd operation 337, draw uniformly at random a seed $\sigma$, 345, in $\{0,1\}^\kappa$;
3. Using cryptographic pseudo-random number generator 335,

$$\text{CPRNG}: \{0,1\}^\kappa \rightarrow ((\mathbb{Z}/q\mathbb{Z})^{kN})^{n \cdot (k+1)\ell},$$

obtain $n \cdot (k + 1)\ell$ vectors 342 of the form

$$(\hat{a}_{1,0}^{(i,r)}, \ldots, \hat{a}_{1,N-1}^{(i,r)}, \ldots, \hat{a}_{k,0}^{(i,r)}, \ldots, \hat{a}_{k,N-1}^{(i,r)}) \in$$

$$(\mathbb{Z}/q\mathbb{Z})^{kN}$$

for $1 \leq i \leq n$ and $1 \leq r \leq (k + 1)\ell$ as the output of CPRNG($\sigma$);
4. For $1 \leq i \leq n$ and $1 \leq r \leq (k + 1)\ell$:

- by applying the inverse number-theoretic transform 334, construct the polynomial mask

$$(a_1^{(i,r)}, \ldots, a_k^{(i,r)}),$$

341 where

$$a_j^{(i,r)} = \overline{\text{DFT}_\omega}^{-1}(\hat{a}_{j,0}^{(i,r)}, \ldots, \hat{a}_{j,N-1}^{(i,r)}) \in (\mathbb{Z}/q\mathbb{Z})[X]/(X^N + X^{N/2} + 1),$$

for $1 \leq j \leq k$ ;
- in encryption operation 336, obtain the matching polynomial body $b^{(i,r)} =$

$$\sum_{j=1}^k s'_j \cdot a_j^{(i,r)} + (-s'_{h(r)})s_i \cdot \frac{q}{B^{b(r)}} + e^{(i,j)} \in (\mathbb{Z}/q\mathbb{Z})[X]/(X^N + X^{N/2} + 1),$$

343, where $e^{(i,j)}$ is a Gaussian error over $\mathbb{Z}[X]/(X^N + X^{N/2} + 1)$, such that the ciphertext encrypts the plaintext

$$m = (-s'_{h(r)})s_i \cdot \frac{q}{B^{b(r)}},$$

347;

- by applying the number-theoretic transform 333, compute

$$\overset{\rightharpoonup}{b}^{(i,r)} \leftarrow$$

$$\overline{\mathrm{DFT}}_\omega(b^{(i,r)}) \in (\mathbb{Z}/q\mathbb{Z})^N,$$

344;

5. Return the bootstrapping key

$$\sigma, \left(\overset{\rightharpoonup}{b}^{(i,r)}\right)_{\substack{1 \leq i \leq n \\ 1 \leq r \leq (k+1)\ell}}$$

comprising representations $\sigma$,

$$\left(\overset{\rightharpoonup}{b}^{(i,r)}\right)$$

(with $1 \leq i \leq n$ and $1 \leq r \leq (k+1)\ell$), 344-345, of the respective ciphertexts by seeds and Fourier-domain representations of the body polynomials, all with common seed $\sigma$, 344.

Example 3: Quotient polynomial $p(X) | X^M - 1$

In this example, the techniques of the corresponding example of Fig. 2 may be used. When performing INNT 334, it is possible to obtain coefficient representations $a_i(x)$, 341, mod $p(X)$ and to compute the encryption Enc, 336, mod $p(X)$. As discussed with respect to Fig. 2, when performing NTT 333, it is possible to add a random multiple of $p(X)$ to $b(X)$ to randomize Fourier domain representation 344, but this is not needed.

As an alternative, it is also possible for INTT 334 to avoid reduction modulo $p(X)$. Thus, the polynomials 341 returned by the INNT may be polynomials modulo $X^M-1$. This may in some cases be more computationally efficient. In this case, also encryption Enc, 336, may be computed modulo $X^M - 1$ to obtain body polynomial $b(X)$, 343, mod $X^M -1$, and NTT 333 may be applied to this body polynomial. In this case, it is desirable to randomize the obtained Fourier domain representation 344 by adding a random multiple of $p(X)$ to $b(X)$, either in the coefficient domain before applying the NTT or in the Fourier domain after applying the NTT.

Fig. 3b schematically shows an example of an embodiment of an encrypted multiplication unit 332, for example for use in an encrypted computation device 110.

The encrypted multiplication unit 332 may act on a ciphertext that comprises one or more random mask polynomials, and a body polynomial that is derived from the mask polynomials and a plaintext. For example, the ciphertext may be GLWE-based ciphertext as described herein. The encrypted multiplication unit 332 may act on a ciphertext represented in a compressed way by a seed 345 of a pseudo-random number generator, and by a representation 344 of the body polynomial in a Fourier domain of a number-theoretic transform. For example, the representation 344-345 of the ciphertext may have been previously determined by an encryption unit 331 of Fig. 3a, typically part of a different device than encrypted multiplication unit 332.

The encrypted multiplication unit 332 may be for multiplying the mask and body polynomials of a ciphertext by respective multiplicand polynomials, For example, the encrypted multiplication unit 332 may be used in an encrypted computation to compute an external product, as also discussed with respect to Fig. 4a, or in various other operations of the encrypted computation, for example a multiplication of the ciphertext by a known polynomial. The figure shows respective multiplicand polynomials 351 by which to multiply the mask and body polynomials of the ciphertext. The respective multiplicand polynomials 351 can be all distinct, or the respective multiplicand polynomials 351 can all be equal to one common multiplicand polynomial, for example.

In the example shown in the figure, the multiplicand polynomials are obtained in a coefficient representation 351, and number theoretic transform unit NTT, 333, is used to apply the number-theoretic transform to convert the coefficients 351 of the respective multiplicand polynomials to Fourier-domain representations 352. The NTT unit can be as described for Fig. 2 or Fig. 3a. Unit 332 is not needed, e.g., multiplicand polynomials may already be available in a Fourier-domain representation, e.g., as a previous output of multiplication unit 332 or otherwise.

In order to obtain a representation of the ciphertext 344-345 on which the multiplication can be performed, the representation 344-345 may be expanded. To this end, a pseudo-random number generator (PRNG) Gen, 335, may be used according to the seed 335 to generate representations 342 of the mask polynomials in the Fourier domain. The PRNG may be as described for Fig. 2 or Fig. 3a.

Given Fourier domain representations of mask polynomials 342, body polynomial 344, and the multiplicand polynomials 352, a multiplication unit 338 may be used to compute polynomial products of the mask polynomials 342 and the body polynomial 344 by the respective multiplicand polynomials 352 in the Fourier domain. As a result, Fourier domain representations 354 of the computed polynomial products in the Fourier domain may be obtained. For example, the multiplication unit 338 may be multiplication unit 238 of Fig. 2. Typically, the Fourier domain representations comprise evaluations of the respective polynomials in a set of evaluation values, and multiplication 338 may be implemented by pointwise multiplication of the polynomial evaluations as known per se.

Encrypted multiplication unit 332 may output the computed polynomial products in various formats as desired. For example, the polynomial products may be output in their Fourier domain representation 354, or, as shown in the figure, INNT unit 334 may be used to apply an inverse number theoretic transform in order to convert representations 354 of some or all of the computed polynomial products in the Fourier domain to coefficient representations 353. INNT unit 334 can be as described for Fig. 2 or Fig. 3a, for example.

In cases where there is not a one-to-one correspondence between Fourier domain representations 354 and coefficient domain representations 353, in some cases, an extra randomization may be performed as also discussed with respect to Fig. 2. In particular, if encrypted multiplication unit 332 outputs Fourier domain representation 354, a randomization may be performed such that a random Fourier domain representation 354 of the product is output. For example, when using a quotient polynomial $p(X)|X^M - 1$, this may be done by adding a random multiple $r(X)p(X)$ of the quotient polynomial $p(X)$ to the Fourier domain representation, e.g. generating it in the coefficient domain and using a FFT to convert it to the Fourier domain.

As discussed for INTT 234 of Fig. 2, in the case where a quotient polynomial $p(X)|X^M - 1$ is used, it is also possible to output a coefficient domain representation 353 that is not reduced modulo p(X) and is thus represented by a polynomial modulo $X^M - 1$. in this case, it is also desirable to add a random multiple $r(X)p(X)$ of the quotient polynomial to the output coefficient domain representation 353 to randomize it. The random multiple can be added in the Fourier domain prior to applying INTT 334, or in the coefficient domain after applying the INTT.

Encrypted multiplication unit 332 may be used to repeatedly perform polynomial multiplications on the same encryption 344-345. In such cases, the expanded representation 342,344 of the ciphertext may be kept in memory, and then used to compute the further polynomial multiplications without needing to apply the PRNG 335 at this point again, thus improving efficiency for the further multiplications. However, to save memory, it is also possible to delete the Fourier-domain representations 342 of the mask polynomials and re-generate them as needed.

Fig. 4a schematically shows an example of an encrypted multiplication unit 432, for example for use in an encrypted computation device 110. The encrypted multiplication unit 432 is used in this figure to compute an external product of a GGSW-type ciphertext 456 with a GLWE-based multiplicand ciphertext 455.

Generally, a GGSW-type ciphertext 456 encrypting a plaintext $M(X)$ may comprise a collection of respective GLWE-based ciphertexts that encrypt respective values that are based on the plaintext. A GGSW-type ciphertext comprising RLWE-based ciphertext is may also be referred to as a RGSW ciphertext. GGSW-type ciphertexts defined over a discretized torus, e.g., $\mathbb{T}_q = q^{-1}\mathbb{Z}/\mathbb{Z}$ may also be referred as TGSW, TGGSW, or TRGSW ciphertexts.

For example, a TGGSW encryption of $m \in \mathbb{Z}_N[X]$ under private key $s'$ may be defined as a collection of GLWE-based ciphertexts

$$\mathbf{C} \leftarrow TGGSW_{s'}(m) = \left( TGLWE_{s'}\left( (-s'_{h(r)})m \cdot \frac{1}{B^{b(r)}} \right) \right)_{1 \leq r \leq (k+1)\ell}$$

for respective values $h(r)$, see I. Chillottl et al., "CONCRETE: Concrete Operates oN Ciphertexts Rapidly by Extending TfhE" (available at https://homomorphlcencryption.org/ wp-content/uploade/2020/12/wahc20_demo_damien.pdf).

It is noted that, in the literature, GGSW-type ciphertexts are also sometimes described as being based on GLWE encryptions of zero, to which values based on the plaintexts are added. Such GGSW-type ciphertexts are also considered to be GGSW-type ciphertexts that comprise GLWE-based ciphertexts. For example, the TGGSW ciphertexts of "TFHE: fast fully homomorphic encryption over the torus" are GGSW-type ciphertexts that comprise GLWE ciphertexts.

Namely, a TGGSW-type ciphertext is defined in that reference as $\text{TGGSW}_{s'}(m) = \mathbf{Z} + m \cdot \mathbf{G}^{\mathrm{T}} \in \mathbb{T}_{N,q}[X]^{(k+1)\ell \times (k+1)}$, where

$$\mathbf{Z} \leftarrow \begin{pmatrix} \text{TGLWE}_{s'}(0) \\ \vdots \\ \text{TGLWE}_{s'}(0) \end{pmatrix} \qquad ((k+1)\ell \text{ rows})$$

and

$$\mathbf{G}^{\mathrm{T}} = \operatorname{diag}(g^{\mathrm{T}}, \dots, g^{\mathrm{T}}) \quad (k+1 \text{ times}) \quad \text{with } g = \left(\tfrac{1}{B}, \tfrac{1}{B^2}, \dots, \tfrac{1}{B^\ell}\right) \in \mathbb{T}_q^\ell,$$

is the so-called gadget matrix. Integer $B \geq 2$ is a system parameter such that for example $B^\ell | q$, or more generally, $B^\ell \leq q$. In this example, the rows of the TGGSW ciphertexts are GLWE-type encryptions. Namely, in the "TFHE" reference, a row of a GGSW-type ciphertext is described as a sum of an encryption of zero and a vector, e.g., in the computation $Z + m \cdot G^{\mathrm{T}}$. Such a row can also be regarded as a TGLWE ciphertext by seeing the mask polynomials of the resulting sum as random masks, and seeing the body polynomial as encrypting a value that depends on the vector that has been added to the encryption of zero. For example, the above described TGGSW encryption can be seen as a series of GLWE-based ciphertexts as follows, see also the reference "CONCRETE: Concrete Operates oN Ciphertexts Rapidly by Extending TfhE". Let:

$$\mathbf{C} = (c_{r,s})_{\substack{1 \leq r \leq (k+1)\ell \\ 1 \leq s \leq k+1}} \leftarrow \text{TGGSW}_{s'}(m)$$

be a TGGSW ciphertext. Let $(a_1^{(r)}, \dots, a_k^{(r)}, b^{(r)})$ denote the TGLWE encryption of 0 in row #$r$ in C. Writing $r = b + (h - 1)\ell$ with $1 \leq b = b(r) \leq \ell$ and $1 \leq h = h(r) \leq k + 1$ and $h(r) = (r - b(r) + \ell)/\ell$, row #$r$ of C may be described as:

$$(*) \qquad \left(a_1^{(r)}, \dots, a_k^{(r)}, \sum_{j=1}^{k} s'_j \cdot a_j^{(r)} + e^{(r)}\right) + m\vec{t}_h \cdot \frac{1}{B^b}$$

where $\vec{t}_h = (0, \dots, 0, 1, 0, \dots, 0)$ with a 1 in position #$h$. It may be noted that the above expression $(*)$ satisfies:

1.

$$\text{If } 1 \leq h \leq k \text{ then } (*) = \text{TGLWE}_{s'}\left((-s'_h)m \cdot \tfrac{1}{B^b}\right);$$

2.

$$\text{If } h = k + 1 \text{ then } (*) = \text{TGLWE}_{s'}\left(m \cdot \tfrac{1}{B^b}\right).$$

Thus, the TGGSW ciphertext C can be viewed as a series $(k + 1)\ell$ TGLWE ciphertexts, representing values that depend on the plaintext $m$ to be encrypted:

$$C \leftarrow \mathrm{TGGSW}_{s'}(m) = \begin{pmatrix} \mathrm{TGLWE}_{s'}((-s'_1)m \cdot \frac{1}{B^1}) \\ \vdots \\ \mathrm{TGLWE}_{s'}((-s'_1)m \cdot \frac{1}{B^\ell}) \\ \vdots \\ \vdots \\ \mathrm{TGLWE}_{s'}((-s'_k)m \cdot \frac{1}{B^1}) \\ \vdots \\ \mathrm{TGLWE}_{s'}((-s'_k)m \cdot \frac{1}{B^\ell}) \\ \mathrm{TGLWE}_{s'}(m \cdot \frac{1}{B^1}) \\ \vdots \\ \mathrm{TGLWE}_{s'}(m \cdot \frac{1}{B^\ell}) \end{pmatrix}$$

$$= \left\{ \mathrm{TGLWE}_{s'} \left( (-s'_{h(r)})m \cdot \frac{1}{B^{b(r)}} \right) \right\}_{1 \le r \le (k+1)\ell}$$

by setting $s'_{k+1} = -1$.

The figure shows a representation 456 of the GGSW-type ciphertext. The GLWE-based ciphertexts of the GGSW-type ciphertext may be represented by respective seeds 445 of a pseudo-random number generator (PRNG) and representations 444 of the body polynomials in the Fourier domain of a number-theoretic transform, as also discussed elsewhere. For example, the representations may have been determined by encryption unit 331 of Fig. 3a, As shown in the figure, the GLWE-based ciphertexts may share a common seed 445, e.g., the PRNG may be seeded by seed 445.

In order to compute the external product, the representations 444-445 of the GLWE-based ciphertexts of GGSW-type ciphertexts 456 may be expanded. To this end, a pseudo-random number generator 435, e.g., PRNG 335 of Fig. 3a-3b, may be used according to the common seed 445, or according to respective seeds, to generate representations of the mask polynomials of the GLWE-based ciphertexts 444 in the Fourier domain. This may be done as described with respect to Fig. 3b. As shown in the figure, an expanded representation of the GGSW-type ciphertext in the Fourier domain may be obtained comprising Fourier representations 442 of the respective mask polynomials, and Fourier representations 444 of the respective body polynomials.

As is known per se, an external product of a GGSW-type ciphertext 456 by a GLWE-based multiplicand ciphertext 455 may be computed by multiplying the mask and body polynomials of the respective GLWE-based ciphertexts 444 by respective multiplicand polynomials 451 based on the GLWE-based multiplicand ciphertext 455.

The determining of the multiplicand polynomials 451 is shown in detail in the figure for the case of the external product described e.g. in "CONCRETE: Concrete Operates oN Ciphertexts Rapidly by Extending TfhE". In this case, the multiplicand polynomials are obtained by determining a so-called gadget decomposition GDec, 439, of GLWE-based multiplicand ciphertext 455. Computing the gadget decomposition may comprise applying a coefficientwise radix decomposition to the polynomials of ciphertext 455, thus obtaining multiplicand polynomials with small coefficients, e.g., in a range [-$B$/2, $B$/2]. This is shown in the figure, where mask polynomial $a_1$ of ciphertext 455 is radix-decomposed into polynomials $a_{1,1}, ..., a_{1,\ell}$; body polynomial $b$ is radix-decomposed into polynomials $b_1, ..., b_\ell$ etc. in general, a respective multiplicand polynomial 451 may be obtained for each GLWE encryption of the GGSW-type ciphertext 456.

As in Figs. 2 and 3b, in order to carry out the multiplication by the multiplicand polynomials 451, the multiplicand polynomials may be converted, by an NTT unit 433, into representations 452 a Fourier domain of a number-theoretic transform. The multiplication may then be carried out in the Fourier domain by a multiplication unit 438. The multiplication unit 438 may be based on the multiplication units of Fig. 2 and Fig. 3b, but is in this case adapted to perform a matrix-vector multiplication of the $1 \times (k + 1)\ell$-sized vector of multiplicand polynomials 452 by a $(k + 1)\ell \times (k + 1)$-size matrix of polynomials 442, 444 representing the GGSW-type ciphertext 458.

In this example, the mask and body polynomials of a given GLWE-based encryption 444 are all multiplied by a common multiplicand polynomial of the multiplicand polynomials 452, but if needed it is also possible to use different multiplicand polynomials for different polynomials of a GLWE-based encryption 442,444.

The multiplication 438 may result in mask and body polynomials of a GLWE-based ciphertext 454, represented in the Fourier domain. The ciphertext 454 may represent an encryption of the product of the values encrypted by GLWE-based ciphertext 455 and GGSW-type ciphertext 456. This product is also referred to as an external product. The encryption may optionally be converted to coefficient form 453 by an INTT unit 434 applying an inverse of the number-theoretic transform as in Fig, 2, 3a, and 3b.

The external product has various applications. For example, the external product can be used in an evaluation of a GGSW-encrypted circuit on GLWE-encrypted values, e.g., using circuit bootstrapping as described in "TFHE: Fast Fully Homomorphic Encryption over the Torus".

Another important application is to compute an encrypted CMux gate, also known as a controlled selector gate or controlled multiplexer. The CMux gate may obliviously select a first GLWE-based ciphertext or a second GLWE-based ciphertext based on the GGSW-type ciphertext by computing a product of the GGSW-type ciphertext and a difference between the first and second GLWE ciphertexts, and adding the first GLWE ciphertext to the computed product. Mathematically, this may be described as:

$$c' \leftarrow \text{CMux}(C, c_0, c_1) := C \boxdot (c_1 - c_0) + c_0,$$

where $c_0$, $c_1$, c' are GLWE-based ciphertexts and C is a GGSW-type ciphertext, and $\boxdot$ denotes the external product.

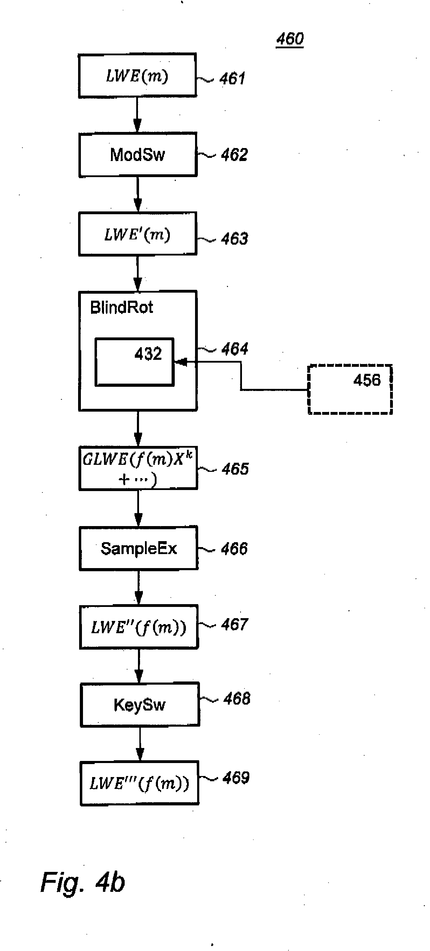

In particular, the external product may be used in a programmable bootstrapping operation of a TFHE-like homomorphic encryption scheme. The programmable bootstrapping may use a bootstrapping key that comprises the GGSW-type ciphertext 456. Since a bootstrapping key typically contains many GGSW-type ciphertexts that are used in such external products, the provided techniques are particularly advantageous in this case. A particular example of a programmable bootstrapping is described with respect to Fig. 4b.

Generally, a TFHE bootstrapping key may comprise TGGSW encryptions of parts of a secret key, for example, respective bits. The programmable bootstrapping may evaluate a decryption function using this secret key under encryption by computing external products of the TGGSW encryptions. This is described for example in "Programmable Bootstrapping Enables Efficient Homomorphic inference of Deep Neural Networks", As a detailed example, let $\mathbb{T}_q = q^{-1}\mathbb{Z}/\mathbb{Z}$ denote the discretized torus for a positive integer $q$ and let $\mathbb{T}_{N,q}[X] = \mathbb{T}_q[X]/(X^N + 1)$ denote the companion polynomial module where $N$ is a power of two; let also $\mathbb{B} = \{0,1\}$. If $s = (s_1, ..., s_n) \in \mathbb{B}^n$ represents a private TLWE key, the bootstrapping key may comprise encryptions:

$$\text{bsk}[j] \leftarrow \text{TGGSW}_{s'}(s_j) \in \mathbb{T}_{N,q}[X]^{(k+1)\ell \times (k+1)} \quad \text{for } 1 \leq j \leq n,$$

where $s' \in \mathbb{B}_N[X]^k$ with $\mathbb{B}_N[X] = \mathbb{B}[X]/(X^N + 1)$ is a secret key and where $n, N, k, \ell$ are system parameters. In a more general case, the secret key s' can be sampled over $R[X]/(p(X))$ for a ring R.

The improved storage and bandwidth requirements due to the compressed representation 456 of GGSW-type ciphertexts will be illustrated based on the above bootstrapping key. In the above example, the bootstrapping keys amount in total to $n\ell(k + 1)^2$ polynomials in $\mathbb{T}_{N,q}[X]$, that is, to $n\ell(k + 1)^2 N$ elements of $\mathbb{T}_q$. An element of $\mathbb{T}_q$ is of the form $\frac{a}{q}$ for an $a \in \mathbb{Z}/q\mathbb{Z}$ and therefore can be encoded with $\lceil \log_2 q \rceil$ bits. As a result, the above example bootstrapping keys may use

$$n\ell(k + 1)^2 N \lceil \log_2 q \rceil$$

bits for storage and transmission. Typical parameters are $n = 630$, $\ell = 3$, $k = 1$, $N = 1024$, and $q = 2^{64}$. In this case, the example bootstrapping key has a total size of about 62 megabytes.

The compressed representation allows GLWE-based ciphertexts to be represented using less storage. A GLWE-based ciphertext may comprise $k + 1$ elements: $k$ mask polynomials $a_j$ drawn uniformly at random e.g. from $\mathbb{T}_{N,q}[X]$, plus one additional polynomial, e.g., $b = \sum_{j=1}^k s'_j \cdot a_j + \mu + e$ in $\mathbb{T}_{N,q}[X]$ referred to as the body polynomial. Using the provided techniques, a GLWE-based ciphertext may be represented as a pair $(\sigma, \bar{b})$, where $\bar{b}$, 444 is a Fourier domain representation of the body polynomial, and $\sigma \in \{0,1\}^\lambda$, 445 is a random seed, where $\lambda$ is a security parameter.

Pseudo-random number generator 435 may be used to recover the mask from the seed, e.g., from

$$\mathrm{CPRNG}: \{0,1\}^{\lambda} \rightarrow (\mathbb{Z}/q\mathbb{Z})^{kN} ,$$

$$\sigma \longmapsto \mathrm{CPRNG}(\sigma) = (\overline{a_{1,0}}'', ..., \overline{a_{1,N-1}}'' ..., \overline{a_{k,0}}'', ..., \overline{a_{k,N-1}}'')$$

Fourier-domain representation of the mask polynomials $(\overline{a}_1, ..., \overline{a}_k')$ may be set, for $1 \leq j \leq k$, to $\overline{a}_j' = (\overline{a_{j,0}}''/q, ..., \overline{a_{j,N-1}}''/q)$.

Hence, using the same seed $\sigma$, 445 for generating the Fourier domain representations of the $n \cdot (k+1)\ell$ TGLWE ciphertexts forming the $n$ bootstrapping keys, they can be represented with

$$\lambda + n\ell(k+1)N\lceil \log_2 q \rceil \qquad (2)$$

bits, dividing roughly by a factor $(k+1)$ the initial memory requirements. With the above example parameters of $n = 630$, $\ell = 3$, $k = 1$, $N = 1024$, $q = 2^{64}$ and $\lambda = 128$, the total size of the bootstrapping keys becomes 247,726,208 bits, that is, about 31 megabytes.

Fig. 4b schematically shows an example of a bootstrapping unit 460, for example for use in an encrypted computation device 110. Bootstrapping unit 460 may apply a programmable bootstrapping operation to an LWE encryption 461 to obtain an output LWE encryption 469, The output LWE encryption 459 may contain an amount of noise that is independent of the noise in the input encryption 461. Unit 460 may thus be used to reduce the noise in input encryption 461. The output encryption 469 may encrypt the same value of the input encryption, but can interestingly also encrypt the result of applying a function to the input encryption 461. Such a programmable bootstrapping is known e.g. from "Programmable bootstrapping enables efficient homomorphic inference of deep neural networks" (the section "Programmable Bootstrapping" of that paper ).

As shown in the figure, the programmable bootstrapping may comprise a blind rotation operation 464. The blind rotation operation may evaluate an LWE decryption in an exponent of a GLWE-encrypted monomial, referred to herein as the bootstrapping monomial. In particular, the blind rotation may result in an encrypted polynomial product of a test polynomial and the bootstrapping monomial. The bootstrapping monomial may represent the plaintext value as an exponent. The blind rotation operation 464 may be implemented in terms of external products that can be computed as described herein, e.g., by encrypted multiplication unit 432 of Fig. 4a, in particular, the blind rotation 464 may comprise computing external products of one or more GGSW-type ciphertexts comprised in the bootstrapping key 456, e.g., encryptions of bits or other portions of the decryption key of the input encryption 461, with GLWE-based multiplicand ciphertexts that are based on the input encryption 461. By using the provided techniques, the computation of the external products can be improved as described herein. The external products may for example be computed as part of a controlled multiplexer of the blind rotation 464 to obliviously select a GLWE-based ciphertext for a zero bit of the LWE decryption key or a GLWE-based ciphertext for a one bit of the LWE decryption key, using a GGSW encryption of the bit of the LWE decryption key of bootstrapping key 456.

As shown in the figure, the blind rotation 464 may be preceded by a modulus switching operation in which the input encryption 461 is scaled to obtain a scaled input encryption 463. For example, as known per se, using quotient polynomial $p(X) = X^N + 1$, a scaling to the domain $[0,2N)$ may be applied. E.g., the components of the ciphertext may be scaled by $2N/q$, e.g., each component may go through an operation of the form $\lceil 2N(\cdot \bmod q)/q \rfloor$, where input ciphertext 461 is defined modulo $q$. The result 463 may in this case an LWE-type ciphertext modulo 2N. More generally, also when using other quotient polynomials that divide $X^M -1$ for a given $M$, the input ciphertext 461 may be scaled to the domain $[0, M)$. As known per se, the input ciphertext 461 may be such that the scaled ciphertext 463 takes on at most $N$ possible values, e.g., by ensuring that the most significant bit of the input is set to zero or similar.

As is known per se, the blind rotation 464 may use a test polynomial. Essentially, the function being evaluated by the programmable bootstrapping may be identified as a look-up table with pairs $(i, T[i])$ for $0 \leq i \leq N - 1$. The look-up table may be used to define the test polynomial, e.g.,

$$v(X) = v_0 + v_1 X + \cdots + v_{N-1} X^{N-1} \quad \text{with } v_i = T[i].$$

By computing a product of the bootstrapping monomial, e.g., $X^{-\overline{\mu}}$ for plaintext $\overline{\mu}$, by the test polynomial, e.g., $v(X)$, a GLWE encryption 465 may be obtained having a result of the programmable bootstrapping as a value of a fixed coefficient. A sample extraction operation 466 may be obtained to extract a coefficient of the GLWE ciphertext 465 resulting from the blind rotation to get an LWE ciphertext 467 of the desired coefficient. The sample extraction 466 may optionally be followed by a key switching operation 468 to obtain the output LWE ciphertext 469, although also LWE ciphertext 467 can be used as output. The output ciphertext 467 or 469 can be an encryption under the same key as the input ciphertext 461, for example, although this is not needed.

The programmable bootstrapping described in "Programmable bootstrapping enables efficient homomorphic inference of deep neural networks" is for polynomials modulo the cyclotomic polynomial $X^N + 1$ where $N$ is a power of two. Interestingly, the inventor realized that the programmable bootstrapping can be used in combination with other quotient polynomials as well. To this end, a test polynomial may be used in the blind rotation 464 that is configured such that multiplying it modulo the quotient polynomial with the bootstrapping monomial corresponding to a plaintext, has a desired function output for that plaintext as its constant (or other fixed) coefficient.

In particular, to determine the test polynomial, the techniques may be used disclosed in European patent application EP 21290080.7, filed on 07.12.21 by Zama SAS with title "ENCRYPTED COMPUTATION COMPRISING A BLIND ROTATION" As described there, generic techniques may be used to determine the test polynomial given the quotient polynomial, e.g., as discussed in the section "Example test polynomial 4. Other quotient polynomials/coefficient" of the reference. As also described in the reference, the test polynomial may be determined especially efficiently in case the fixed coefficient is the leading or constant coefficient, and/or in case the quotient polynomial is a trinomial $X^N \pm \in X^{N/2} + 1$.

In particular, in order to program the constant coefficient, coefficients the test polynomial may be set to

$$v_i = \sum_{j=0}^{i} \frac{p_{i-j}}{p_0} K_j$$

, where $p_i$ are the coefficients of the quotient polynomial $p(x)$ and $K_j$ are the respective desired output values. In order to program the leading coefficient, the coefficients of the test polynomial may similarly be set to

$$v_i = \begin{cases} K_0 & \text{if } i = N - 1 \\ -\sum_{j=0}^{i} p_{i-j} K_{j+1} & \text{otherwise} \end{cases}$$

This is also described in the above reference in the sections "Example test polynomial 1: fixed coefficient is constant coefficient" and "Example test polynomial 2: fixed coefficient is leading coefficient".

In the case where the quotient polynomial $p(X)$ is a trinomial of the form $p(X) = X^N + \varepsilon X^{N/2} + 1$ for even $N$ and $\varepsilon \in (-1,1)$. the $s$th coefficient, $s < N/2$, may be programmed by using a test polynomial with the following coefficients:

$$v_i = \begin{cases} -\epsilon K_{N/2+(i-s)} - K_{N+(i-s)} & \text{if } 0 \le i < s \\ K_{i-s} & \text{if } s \le i < \frac{N}{2} \\ -\epsilon K_{N/2+(i-s)} & \text{if } \frac{N}{2} \le i < \frac{N}{2} + s \\ \epsilon K_{(i-s)-N/2} + K_{i-s} & \text{if } \frac{N}{2} + s \le i < N \end{cases}$$

This is also described in the above reference in the section "Example test polynomial 3: quotient polynomial is $X^N \pm X^{N/2} + 1$".

Additional details and other examples of performing programmable bootstrapping where the quotient polynomial is not equal to $X^N + 1$ are found in the above reference .

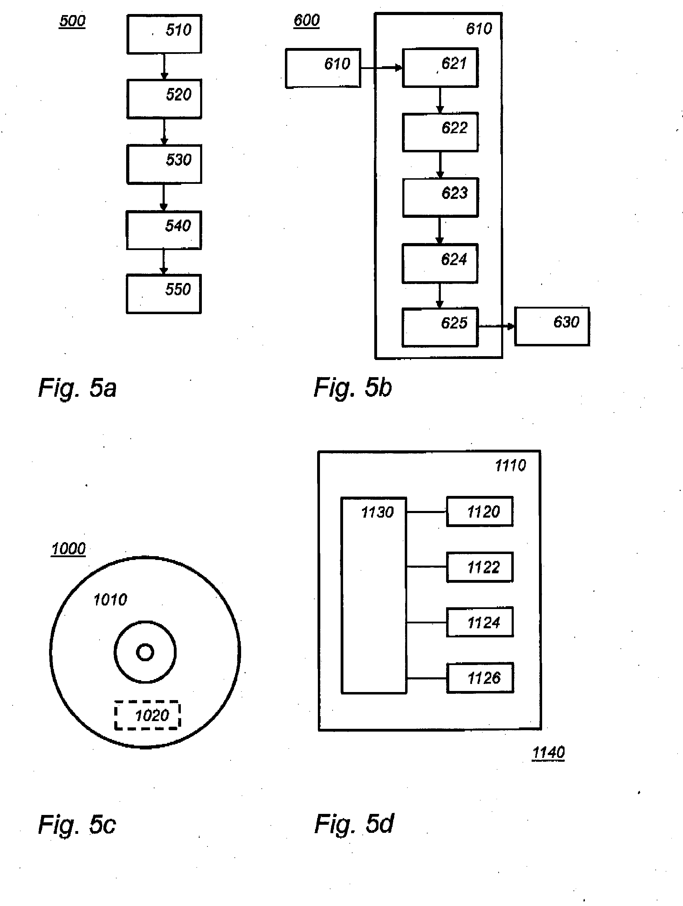

Fig. 5a schematically shows an example of an embodiment of a computer-implemented encrypted computation method 500.

The method 500 may comprise storing data representing a ciphertext. The ciphertext may comprise one or more random mask polynomials and a body polynomial derived from the mask polynomials and a plaintext. The method 500 may comprise obtaining 520 respective multiplicand polynomials by which to multiply the mask polynomials and the body polynomial. The method 500 may comprise expanding 530 the stored data representing the ciphertext. The stored data may comprise a seed of pseudo-random number generator and a representation of the body polynomial in a Fourier domain of a number-theoretic transform. The expanding may comprise using the pseudo-random number generator according to the seed to generate representations of the mask polynomials in the Fourier domain. The method 500 may comprise computing 540 polynomial products of the mask polynomials and the body polynomial by the respective multiplicand polynomials. The polynomial products may be computed in the Fourier domain. The computation may result in representations of the computed polynomial products in the Fourier domain. The method 500 may comprise outputting 550 the computed polynomial products.

Fig. 5b schematically shows an example of an embodiment of a computer-implemented method 600 of computing a representation of a ciphertext. The representation may be for use in an encrypted computation method according to any one of the preceding claims. The method 600 may comprise obtaining 610 a plaintext to encrypt. The method 600 may comprise generating 620 the ciphertext. The ciphertext may comprise one or more mask polynomials and a body polynomial. The generating 620 may comprise obtaining 621 a seed for a pseudo-random number generator. The generating 620 may comprise randomly choosing 622 the mask polynomials by using the pseudo-random number generator according to the seed to generate representations of the mask polynomials in a Fourier domain of a number-theoretic transform. The generating 620 may comprise applying 623 an inverse of the number-theoretic transform to the evaluations of the mask polynomials to determine coefficients of the mask polynomials. The generating 620 may comprise, using the plaintext, determining 624 coefficients of the body polynomial such that the ciphertext encrypts the plaintext. The generating 620 may comprise applying 625 the number-theoretic transform to the coefficients of the body polynomial to determine a representation of the body polynomial in the Fourier domain. The method 600 may comprise outputting 630 the representation of the ciphertext, wherein the representation comprises the seed and the representation of the body polynomial in the Fourier domain.

Many different ways of executing the method(s) 500, 600 are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the methods may be executed using software, which comprises instructions for causing a processor system to perform method 500 or 600. Software may only include those steps taken by a particular sub-entity of the system. The software may be stored in a suitable storage medium, such as a hard disk, a floppy, a memory, an optical disc, etc, The software may be sent as a signal along a wire, or wireless, or using a data network, e.g., the internet. The software may be made available for download and/or for remote usage on a server. Embodiments of the method may be executed using a bitstream arranged to configure programmable logic, e.g., a field programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Typically, the devices described herein, e.g., in Fig. 1a-1b, comprise one or more microprocessors which executes appropriate software stored at the system; for example, that software may have been downloaded and/or stored in a corresponding memory, e.g., a volatile memory such as RAM or a non-volatile memory such as Flash, Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, the systems may comprise circuits for the evaluation of cryptographic primitives. A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Fig. 5c shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of performing a computation on LWE-encrypted values, according to an embodiment.

Instead or in addition, the data 1020 may represent a ciphertext. The ciphertext may comprise one or more mask polynomials and a body polynomial derived from the mask polynomials and a plaintext. The data 1020 may comprise a seed of a pseudo-random number generator for generating representations of the mask polynomials in a Fourier domain of a number-theoretic transform, and a representation of the body polynomial in the Fourier domain. In particular, the data 1020 may represent a bootstrapping key for use in a programmable bootstrapping, wherein the bootstrapping key comprises multiple respective such ciphertexts, e.g., encrypting respective values based on a secret key of the programmable bootstrapping.

The data 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of performing a computation on LWE-encrypted values.

Fig. 5d shows in a schematic representation of a processor system 1140. according to an embodiment of a device for performing an encrypted computation or computing a representation of a ciphertext. The processor system comprises one or more integrated circuits 1110. The architecture of the one or more integrated circuits 1110 is schematically shown in Fig. 6b. Circuit 1110 comprises a processing unit 1120, e.g., a CPU, for running computer program components to execute a method according to an embodiment and/or implement its modules or units, Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus, The processor system 1110 may be arranged for contact and/or contact-less communication, using an antenna and/or connectors, respectively.

For example, in an embodiment, processor system 1140, e.g., the device for performing the encrypted computation or computing the representation, may comprise a processor circuit and a memory circuit, the processor being arranged to execute software stored in the memory circuit. For example, the processor circuit may be an Intel Core 17 processor, ARM Cortex-RB, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software Interface, e.g., a hard drive, a network interface, etc., arranged for providing the software.

While device 1110 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1110 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments,

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C, The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented encrypted computation method (500), comprising:

    - storing (510) data representing a ciphertext, wherein the ciphertext comprises one or more random mask polynomials and a body polynomial derived from the mask polynomials and a plaintext;
    - obtaining (520) respective multiplicand polynomials by which to multiply the mask polynomials and the body polynomial;
    - expanding (530) the stored data representing the ciphertext, wherein the stored data comprises a seed of pseudo-random number generator and a representation of the body polynomial in a Fourier domain of a number-theoretic transform, and wherein the expanding comprises using the pseudo-random number generator according to the seed to generate representations of the mask polynomials In the Fourier domain;
- computing (540) polynomial products of the mask polynomials and the body polynomial by the respective multiplicand polynomials, wherein the polynomial products are computed in the Fourier domain, resulting in representations of the computed polynomial products in the Fourier domain; and
- outputting (550) the computed polynomial products.

2. The method (500) of claim 1, wherein the method comprises performing a programmable bootstrapping according to a bootstrapping key, wherein the bootstrapping key comprises the GGSW-type ciphertext and wherein the performing of the programmable bootstrapping comprises the computation of the external product.

3. The method (500) of claim 2, wherein performing the programmable bootstrapping comprises performing a blind rotation according to a test polynomial, wherein the blind rotation computes a GLWE-type encryption of a monomial multiplied by the test polynomial modulo a quotient polynomial, wherein the quotient polynomial is different from $X^N + 1$,

4. The method (500) of any preceding claim, comprising computing an external product of a GGSW-type ciphertext with a GLWE-based multiplicand ciphertext, wherein the GGSW-type ciphertext comprises multiple GLWE-based ciphertexts, and wherein the method comprises multiplying the mask and body polynomials of the respective GLWE-based ciphertexts by respective multiplicand polynomials based on the GLWE-based multiplicand ciphertext.

5. The method (500) of claim 4, wherein the method comprises obliviously selecting a first GLWE-based ciphertext or a second GLWE-based ciphertext based on the GGSW-type ciphertext by computing an external product of the GGSW-type ciphertext and a difference between the first and second GLWE-based ciphertexts, and adding the first GLWE-based ciphertext to the computed product.

6. The method (500) of any preceding claim, comprising obtaining coefficients of the respective multiplicand polynomials and applying the number-theoretic transform to convert the coefficients of the respective multiplicand polynomials into the Fourier domain, and/or applying an inverse number theoretic transform to convert a representation of a computed polynomial product in the Fourier domain to coefficients of the computed polynomial product.

7. The method (500) of any preceding claim, further comprising keeping the expanded stored data representing the ciphertext in a memory and using the expanded stored data to compute further polynomial products of the mask polynomials and the body polynomials by further multiplicand polynomials.

8. The method (500) of any preceding claim, wherein the polynomials are defined modulo a quotient polynomial, wherein the quotient polynomial divides $X^M - 1$.

9. The method (500) of claim 8, wherein the quotient polynomial is $(X^M - 1)/(X^d - 1)$, wherein $M = hd$ and $d = M - N$, for example, the quotient polynomial is $X^N + 1$ or $X^{N+N/2+1}$.

10. The method (500) of claim 9, wherein the polynomials are defined over a set of cardinality $2^{64} - 2^{32} + 1$ or of cardinality equal to a power of two.

11. A computer-implemented method (600) of computing a representation of a ciphertext, wherein the representation is for use in an encrypted computation method according to any one of the preceding claims, the method comprising:

- obtaining (610) a plaintext to encrypt;
- generating (620) the representation of the ciphertext, wherein the ciphertext comprises one or more mask polynomials and a body polynomial, by:

- obtaining (621) a seed for a pseudo-random number generator;
- randomly choosing (622) the mask polynomials by using the pseudo-random number generator according to the seed to generate representations of the mask polynomials in a Fourier domain of a number-theoretic transform;
- applying (823) an inverse of the number-theoretic transform to the evaluations of the mask polynomials to determine coefficients of the mask polynomials;
- using the plaintext, determining (624) coefficients of the body polynomial such that the ciphertext encrypts the plaintext; and

- applying (625) the number-theoretic transform to the coefficients of the body polynomial to determine a representation of the body polynomial in the Fourier domain;

- outputting (630) the representation of the ciphertext, wherein the representation comprises the seed and the representation of the body polynomial in the Fourier domain.

12. The method (600) of claim 11, comprising generating a GGSW-type ciphertext by generating multiple ciphertexts comprising one or more mask polynomials and a body polynomial, wherein the multiple ciphertexts are optionally based on the same seed.

13. A device (110,112) for performing an encrypted computation, the device comprising:

- a storage (140) for storing data representing a ciphertext, wherein the ciphertext comprises one or more random mask polynomials and a body polynomial derived from the mask polynomials and a plaintext;
- a processor system (130) configured to:

- obtain respective multiplicand polynomials by which to multiply the mask polynomials and the body polynomial;
- expand the stored data representing the ciphertext, wherein the stored data comprises a seed of a pseudo-random number generator and a representation of the body polynomial in a Fourier domain of a number-theoretic transform, and wherein the expanding comprises using the pseudo-random number generator according to the seed to generate representations of the mask polynomials in the Fourier domain;
- compute polynomial products of the mask polynomials and the body polynomial by the respective multiplicand polynomials, wherein the polynomial products are computed in the Fourier domain, resulting in representations of the computed polynomial products in the Fourier domain; and
- outputting the computed polynomial products.

14. A device (110,111) for computing a representation of a ciphertext, wherein the representation is for use in an encrypted computation method according to any one of claims 1-10, the device comprising:

- a storage (140) for storing a plaintext to encrypt;
- a processor system (130) configured to:

- generate the representation of the ciphertext, wherein the ciphertext comprises one or more mask polynomials and a body polynomial, by:

- obtaining a seed for a pseudo-random number generator;
- randomly choosing the mask polynomials by using the pseudo-random number generator according to the seed to generate representations of the mask polynomials in a Fourier domain of a number-theoretic transform;
- applying an inverse of the number-theoretic transform to the evaluations of the mask polynomials to determine coefficients of the mask polynomials;
- using the plaintext, determining coefficients of the body polynomial such that the ciphertext encrypts the plaintext; and
- applying the number-theoretic transform to the coefficients of the body polynomial to determine a representation of the body polynomial in the Fourier domain;

- output the representation of the ciphertext, wherein the representation comprises the seed and the representation of the body polynomial in the Fourier domain.

15. A transitory or non-transitory computer-readable storage medium (1000) comprising data representing:

- instructions which, when executed by a processor system, cause the processor system to perform the method according to any one of claims 1-10 and/or to perform the method according to any one of claims 11-12.

**Patentansprüche**

1. Ein computerimplementiertes verschlüsseltes Berechnungsverfahren (500), das Folgendes umfasst:

   - Speichern (510) von Daten, die einen Chiffriertext darstellen, wobei der Chiffriertext eines oder mehrere zufällige Masken-Polynome und ein aus den Masken-Polynomen und einem Klartext abgeleitetes Körper-Polynom umfasst,
   - Erhalten (520) der jeweiligen Multiplikanden-Polynome, mit denen die Masken-Polynome und das Körper-Polynom multipliziert werden sollen;
   - Erweitern (530) der gespeicherten Daten, die den Chiffriertext darstellen, wobei die gespeicherten Daten einen Seed eines Pseudo-Zufallszahlengenerators und eine Darstellung des Körper-Polynoms in einer Fourier-Domäne einer zahlentheoretischen Transformation umfassen, und wobei das Erweitern die Verwendung des Pseudo-Zufallszahlengenerators gemäß dem Seed umfasst, um Darstellungen der Masken-Polynome in der Fourier-Domäne zu erzeugen;
   - Berechnen (540) von Polynom-Produkten der Masken-Polynome und des Körper-Polynoms durch die jeweiligen Multiplikanden-Polynome, wobei die Polynom-Produkte in der Fourier-Domäne berechnet werden, was zu Darstellungen der berechneten Polynom-Produkte in der Fourier-Domäne führt; und
   - Ausgabe (550) der berechneten Polynom-Produkte.

2. Das Verfahren (500) nach Anspruch 1, wobei das Verfahren die Durchführung eines programmierbaren Bootstrappings gemäß einem Bootstrapping-Schlüssel umfasst, wobei der Bootstrapping-Schlüssel den GGSW-Typ-Chiffriertext umfasst und wobei die Durchführung des programmierbaren Bootstrappings die Berechnung des externen Produkts umfasst.

3. Das Verfahren (500) nach Anspruch 2, wobei die Durchführung des programmierbaren Bootstrappings die Durchführung einer blinden Rotation gemäß einem Test-Polynom umfasst, wobei die blinde Rotation eine GLWE-artige Verschlüsselung eines Monoms, multipliziert mit dem Test-Polynom modulo eines Quotienten-Polynoms berechnet, wobei das Quotienten-Polynom von $X^N + 1$ verschieden ist,

4. Das Verfahren (500) nach einem vorstehenden Anspruch, umfassend das Berechnen eines externen Produkts eines GGSW-Typ-Chiffriertextes mit einem GLWE-basierten Multiplikanden-Chiffriertext, wobei der GGSW-Typ-Chiffriertext mehrere GLWE-basierte Chiffriertexte umfasst, und wobei das Verfahren das Multiplizieren der Masken- und Körper-Polynome der jeweiligen GLWE-basierten Chiffriertexte mit jeweiligen Multiplikanden-Polynomen auf der Grundlage des GLWE-basierten Multiplikanden-Chiffriertextes umfasst.

5. Das Verfahren (500) nach Anspruch 4, wobei das Verfahren das verdeckte Auswählen eines ersten GLWE-basierten Chiffriertextes oder eines zweiten GLWE-basierten Chiffriertextes auf der Grundlage des GGSW-Typ-Chiffriertextes durch Berechnen eines externen Produktes des GGSW-Typ-Chiffriertextes und einer Differenz zwischen dem ersten und dem zweiten GLWE-basierten Chiffriertext und Addieren des ersten GLWE-basierten Chiffriertextes zu dem berechneten Produkt umfasst.

6. Das Verfahren (500) nach einem vorstehenden Anspruch, umfassend das Erhalten von Koeffizienten der jeweiligen Multiplikanden-Polynome und das Anwenden der zahlentheoretischen Transformation, um die Koeffizienten der jeweiligen Multiplikanden-Polynome in der Fourier-Domäne umzuwandeln, und/oder das Anwenden einer inversen zahlentheoretischen Transformation, um eine Darstellung eines berechneten Polynom-Produkts in der Fourier-Domäne in Koeffizienten des berechneten Polynom-Produkts umzuwandeln.

7. Das Verfahren (500) nach einem vorstehenden Anspruch, weiter umfassend das Halten der erweiterten gespeicherten Daten, die den Chiffriertext darstellen, in einem Speicher und Verwenden der erweiterten gespeicherten Daten, um weitere Polynom-Produkte der Masken-Polynome und der Körper-Polynome durch weitere Multiplikanden-Polynome zu berechnen.

8. Das Verfahren (500) nach einem vorstehenden Anspruch, wobei die Polynome modulo eines Quotienten-Polynoms definiert sind, wobei das Quotienten-Polynom $X^M$-1 dividiert.

9. Das Verfahren (500) nach Anspruch 8, wobei das Quotienten-Polynom $(X^M - 1)/(X^d - 1)$ ist, wobei $M = hd$ und $d = M - N$, beispielsweise, wobei das Quotienten-Polynom $X^N + 1$ oder $X^{N+N/2+1}$ ist.

**10.** Das Verfahren (500) nach Anspruch 9, wobei die Polynome über eine Menge der Kardinalität $2^{64} - 2^{32} + 1$ oder der Kardinalität gleich einer Zweierpotenz definiert sind.

**11.** Ein computerimplementiertes Verfahren (600) zum Berechnen einer Darstellung eines Chiffriertextes, wobei die Darstellung zur Verwendung in einem verschlüsselten Berechnungsverfahren nach einem vorstehenden Anspruch dient, wobei das Verfahren Folgendes umfasst:

- Erhalten (610) eines zu verschlüsselnden Klartextes;
- Erzeugen (620) der Darstellung des Chiffriertextes, wobei der Chiffriertext eines oder mehrere Masken-Polynome und ein Körper-Polynom umfasst, durch:

- Erhalten (621) eines Seeds für einen Pseudo-Zufallszahlengenerator;
- zufälliges Auswählen (622) der Masken-Polynome unter Verwendung des Pseudo-Zufallszahlengenerators gemäß dem Seed, um Darstellungen der Masken-Polynome in einer Fourier-Domäne einer zahlentheoretischen Transformation zu erzeugen;
- Anwenden (623) einer Umkehrung der zahlentheoretischen Transformation auf die Auswertungen der Masken-Polynome, um die Koeffizienten der Masken-Polynome zu bestimmen;
- unter Verwendung des Klartextes, Bestimmen (624) von Koeffizienten des Körper-Polynoms, so dass der Chiffriertext den Klartext verschlüsselt; und
- Anwenden (625) der zahlentheoretischen Transformation auf die Koeffizienten des Körper-Polynoms, um eine Darstellung des Körper-Polynoms in der Fourier-Domäne zu bestimmen;
- Ausgeben (630) der Darstellung des Chiffriertextes, wobei die Darstellung den Seed und die Darstellung des Körper-Polynoms in der Fourier-Domäne umfasst.

**12.** Das Verfahren (600) nach Anspruch 11, umfassend das Erzeugen eines Chiffriertextes vom GGSW-Typ durch Erzeugen mehrerer Chiffriertexte, die ein oder mehrere Masken-Polynome und ein Körper-Polynom umfassen, wobei die mehreren Chiffriertexte optional auf demselben Seed basieren.

**13.** Eine Vorrichtung (110, 112) zum Durchführen einer verschlüsselten Berechnung, wobei die Vorrichtung Folgendes umfasst;

- einen Speicher (140) zum Speichern von Daten, die einen Chiffriertext darstellen, wobei der Chiffriertext eines oder mehrere zufällige Masken-Polynome und ein aus den Masken-Polynomen abgeleitetes Körper-Polynom und einen Klartext umfasst;
- ein Prozessorsystem (130), das konfiguriert ist zum:

- Erhalten (520) der jeweiligen Multiplikanden-Polynome, mit denen die Masken-Polynome und das Körper-Polynom multipliziert werden sollen;
- Erweitern (530) der gespeicherten Daten, die den Chiffriertext darstellen, wobei die gespeicherten Daten einen Seed eines Pseudo-Zufallszahlengenerators und eine Darstellung des Körper-Polynoms in einer Fourier-Domäne einer zahlentheoretischen Transformation umfassen, und wobei das Erweitern die Verwendung des Pseudo-Zufallszahlengenerators gemäß dem Seed umfasst, um Darstellungen der Masken-Polynome in der Fourier-Domäne zu erzeugen;
- Berechnen (540) von Polynom-Produkten der Masken-Polynome und des Körper-Polynoms durch die jeweiligen Multiplikanden-Polynome, wobei die Polynom-Produkte in der Fourier-Domäne berechnet werden, was zu Darstellungen der berechneten Polynom-Produkte in der Fourier-Domäne führt; und
- Ausgabe (550) der berechneten Polynom-Produkte.

**14.** Eine Vorrichtung (110, 111) zum Berechnen einer Darstellung eines Chiffriertextes, wobei die Darstellung zur Verwendung in einem verschlüsselten Berechnungsverfahren nach einem der Ansprüche 1-10 dient, wobei die Vorrichtung Folgendes umfasst:

- einen Speicher (140) zum Speichern eines zu verschlüsselnden Klartextes;
- ein Prozessorsystem (130), das konfiguriert ist zum:

- Erzeugen der Darstellung des Chiffriertextes, wobei der Chiffriertext eines oder mehrere Masken-Polynome und ein Körper-Polynom umfasst, durch:

Erhalten eines Seeds für einen Pseudo-Zufallszahlengenerator;

zufälliges Auswählen der Masken-Polynome unter Verwendung des Pseudo-Zufallszahlengenerators gemäß dem Seed, um Darstellungen der Masken-Polynome in einer Fourier-Domäne einer zahlentheoretischen Transformation zu erzeugen;

Anwenden einer Umkehrung der zahlentheoretischen Transformation auf die Auswertungen der Masken-Polynome, um die Koeffizienten der Masken-Polynome zu bestimmen;

unter Verwendung des Klartextes, Bestimmen von Koeffizienten des Körper-Polynoms, so dass der Chiffriertext den Klartext verschlüsselt; und

Anwenden der zahlentheoretischen Transformation auf die Koeffizienten des Körper-Polynoms, um eine Darstellung des Körper-Polynoms in der Fourier-Domäne zu bestimmen;

- Ausgeben der Darstellung des Chiffriertextes, wobei die Darstellung den Seed und die Darstellung des Körper-Polynoms in der Fourier-Domäne umfasst.

15. Ein transitorisches oder nicht-transitorisches computerlesbares Speichermedium (1000), das Daten umfasst, die Folgendes darstellen:

- Anweisungen, die, wenn sie von einem Prozessorsystem ausgeführt werden, das Prozessorsystem veranlassen, das Verfahren nach einem der Ansprüche 1-10 und/oder das Verfahren nach einem der Ansprüche 11-12 durchzuführen

**Revendications**

1. Un procédé de calcul chiffré mis en oeuvre par ordinateur (500), comprenant :

- le stockage (510) de données représentant un texte chiffré, dans lequel le texte chiffré comprend un ou plusieurs polynômes de masque aléatoires et un polynôme de corps dérivé des polynômes de masque et d'un texte en clair ;
- l'obtention (520) de polynômes multiplicandes respectifs par lesquels multiplier les polynômes de masque et le polynôme de corps ;
- l'expansion (530) des données stockées représentant le texte chiffré, dans lequel les données stockées comprennent une graine de générateur de nombres pseudo-aléatoires et une représentation du polynôme de corps dans un domaine de Fourier d'une transformée de la théorie des nombres, et dans lequel l'expansion comprend l'utilisation du générateur de nombres pseudo-aléatoires en fonction de la graine pour générer des représentations des polynômes de masque dans le domaine de Fourier ;
- le calcul (540) de produits polynomiaux des polynômes de masque et du polynôme de corps par les polynômes multiplicandes respectifs, dans lequel les produits polynomiaux sont calculés dans le domaine de Fourier, ce qui entraîne des représentations des produits polynomiaux calculés dans le domaine de Fourier ; et
- la sortie (550) des produits polynomiaux calculés.

2. Le procédé (500) selon la revendication 1, dans lequel le procédé comprend l'exécution d'un amorçage programmable en fonction d'une clé d'amorçage, dans lequel la clé d'amorçage comprend le texte chiffré de type GGSW et dans lequel l'exécution de l'amorçage programmable comprend le calcul du produit externe.

3. Le procédé (500) selon la revendication 2, dans lequel l'exécution de l'amorçage programmable comprend l'exécution d'une rotation aveugle en fonction d'un polynôme de test, dans lequel la rotation aveugle calcule un chiffrement de type GLWE d'un monôme multiplié par le polynôme de test modulo un polynôme quotient, dans lequel le polynôme quotient est différent de $X^N + 1$.

4. Le procédé (500) selon une quelconque revendication précédente, comprenant le calcul d'un produit externe d'un texte chiffré de type GGSW avec un texte chiffré multiplicande basé sur GLWE, dans lequel le texte chiffré de type GGSW comprend de multiples textes chiffrés basés sur GLWE, et dans lequel le procédé comprend la multiplication des polynômes de masque et de corps des textes chiffrés basés sur GLWE respectifs par des polynômes multiplicande respectifs sur la base du texte chiffré multiplicande basé sur GLWE.

5. Le procédé (500) selon la revendication 4, dans lequel le procédé comprend la sélection inconsciente d'un premier texte chiffré basé sur GLWE ou d'un second texte chiffré basé sur GLWE sur la base du texte chiffré de type GGSW en calculant un produit externe du texte chiffré de type GGSW et une différence entre les premier et second textes chiffrés basés sur GLWE, et en ajoutant le premier texte chiffré basé sur GLWE au produit calculé.

**6.** Le procédé (500) selon une quelconque revendication précédente, comprenant l'obtention de coefficients des polynômes multiplicandes respectifs et l'application de la transformée de la théorie des nombres pour convertir les coefficients des polynômes multiplicandes respectifs dans le domaine de Fourier, et/ou l'application d'une transformée inverse de la théorie des nombres pour convertir une représentation d'un produit polynomial calculé dans le domaine de Fourier en coefficients du produit polynomial calculé.

**7.** Le procédé (500) selon une quelconque revendication précédente, comprenant en outre la conservation des données stockées étendues représentant le texte chiffré dans une mémoire et l'utilisation des données stockées étendues pour calculer d'autres produits polynomiaux des polynômes de masque et des polynômes de corps par d'autres polynômes multiplicandes.

**8.** Le procédé (500) selon une quelconque revendication précédente, dans lequel les polynômes sont définis modulo un polynôme quotient, dans lequel le polynôme quotient divise $X^M$ - 1.

**9.** Le procédé (500) selon la revendication 8, dans lequel le polynôme quotient est $(X^M$ - 1)/($X^d$ - 1), dans lequel $M = hd$ et $d = M - N$, par exemple, le polynôme quotient est $X^N + 1$ ou $X^{N+N/2+1}$.

**10.** Le procédé (500) selon la revendication 9, dans lequel les polynômes sont définis sur un ensemble de cardinalité $2^{64} - 2^{32} + 1$ ou de cardinalité égale à une puissance de deux.

**11.** Un procédé mis en oeuvre par ordinateur (600) de calcul d'une représentation d'un texte chiffré, dans lequel la représentation est destinée à être utilisée dans un procédé de calcul chiffré selon l'une quelconque des revendications précédentes, le procédé comprenant :

- l'obtention (610) d'un texte en clair à chiffrer ;
- la génération (620) de la représentation du texte chiffré, dans lequel le texte chiffré comprend un ou plusieurs polynômes de masque et un polynôme de corps, par :

- l'obtention (621) d'une graine pour un générateur de nombres pseudo-aléatoires ;
- le choix aléatoire (622) des polynômes de masque en utilisant le générateur de nombres pseudo-aléatoires en fonction de la graine pour générer des représentations des polynômes de masque dans un domaine de Fourier d'une transformée de la théorie des nombres ;
- l'application (623) d'une transformée inverse de la théorie des nombres aux évaluations des polynômes de masque pour déterminer des coefficients des polynômes de masque ;
- en utilisant le texte en clair, la détermination (624) de coefficients du polynôme de corps de sorte que le texte chiffré chiffre le texte en clair ; et
- l'application (625) de la transformée de la théorie des nombres aux coefficients du polynôme de corps pour déterminer une représentation du polynôme de corps dans le domaine de Fourier ;

- la sortie (630) de la représentation du texte chiffré, dans lequel la représentation comprend la graine et la représentation du polynôme de corps dans le domaine de Fourier.

**12.** Le procédé (600) selon la revendication 11, comprenant la génération d'un texte chiffré de type GGSW en générant de multiples textes chiffrés comprenant un ou plusieurs polynômes de masque et un polynôme de corps, dans lequel les multiples textes chiffrés sont facultativement basés sur la même graine.

**13.** Un dispositif (110, 112) pour exécuter un calcul chiffré, le dispositif comprenant :

- un dispositif de stockage (140) pour stocker des données représentant un texte chiffré, dans lequel le texte chiffré comprend un ou plusieurs polynômes de masque aléatoires et un polynôme de corps dérivé des polynômes de masque et d'un texte en clair ;
- un système processeur (130) configuré pour :

- obtenir des polynômes multiplicandes respectifs par lesquels multiplier les polynômes de masque et le polynôme de corps ;

- étendre les données stockées représentant le texte chiffré, dans lequel les données stockées comprennent une graine d'un générateur de nombres pseudo-aléatoires et une représentation du polynôme de corps dans un domaine de Fourier d'une transformée de la théorie des nombres, et dans lequel l'expansion comprend l'utilisation du générateur de nombres pseudo-aléatoires en fonction de la graine pour générer des représentations des polynômes de masque dans le domaine de Fourier ;
- calculer des produits polynomiaux des polynômes de masque et du polynôme de corps par les polynômes multiplicandes respectifs, dans lequel les produits polynomiaux sont calculés dans le domaine de Fourier, ce qui entraîne des représentations des produits polynomiaux calculés dans le domaine de Fourier ; et
- délivrer en sortie les produits polynomiaux calculés.

14. Un dispositif (110, 111) pour calculer une représentation d'un texte chiffré, dans lequel la représentation est destinée à être utilisée dans un procédé de calcul chiffré selon l'une quelconque des revendications 1-10, le dispositif comprenant :

   - un dispositif de stockage (140) pour stocker un texte en clair à chiffrer ;
   - un système processeur (130) configuré pour :

      - générer la représentation du texte chiffré, dans lequel le texte chiffré comprend un ou plusieurs polynômes de masque et un polynôme de corps, par :

         l'obtention d'une graine pour un générateur de nombres pseudo-aléatoires ;
         le choix aléatoire des polynômes de masque en utilisant le générateur de nombres pseudo-aléatoires en fonction de la graine pour générer des représentations des polynômes de masque dans un domaine de Fourier d'une transformée de la théorie des nombres ;
         l'application d'une transformée inverse de la théorie des nombres aux évaluations des polynômes de masque pour déterminer des coefficients des polynômes de masque ;
         en utilisant le texte en clair, la détermination de coefficients du polynôme de corps de sorte que le texte chiffré chiffre le texte en clair ; et
         l'application de la transformée de la théorie des nombres aux coefficients du polynôme de corps pour déterminer une représentation du polynôme de corps dans le domaine de Fourier ;

      - la sortie de la représentation du texte chiffré, dans lequel la représentation comprend la graine et la représentation du polynôme de corps dans le domaine de Fourier.

15. Un support de stockage transitoire ou non transitoire lisible par ordinateur (1000) comprenant des données représentant :

   - des instructions qui, lorsqu'elles sont exécutées par un système processeur, amènent le système processeur à exécuter le procédé selon l'une quelconque des revendications 1-10 et/ou à exécuter le procédé selon l'une quelconque des revendications 11-12.

110

130

140

150

**Fig. 1a**

100

111

131

156

150

112

132

113

**Fig. 1b**

**241**

$$f_0 \quad f_1 \quad \ldots$$

$$f(x) = \sum_i f_i X^i \ mod \ p(X)$$

NTT ~ 233

**242**

$$f(\omega^\cdot) \quad f(\omega^\cdot) \quad \ldots$$

$$\bar{f} = (f(\omega^\cdot), f(\omega^\cdot), \ldots)$$

**238**

**246**

Mul

$$h(\omega^\cdot) \quad h(\omega^\cdot) \quad \ldots$$

**244**

$$g(\omega^\cdot) \quad g(\omega^\cdot) \quad \ldots$$

$$\bar{g} = (g(\omega^\cdot), g(\omega^\cdot), \ldots)$$

INTT ~ 234

NTT ~ 233

**245**

**243**

$$g_0 \quad g_1 \quad \ldots$$

$$h_0 \quad h_1 \quad \ldots$$

$$g(x) = \sum_i g_i X^i \ mod \ p(X)$$

$$h(x) = \sum_i h_i X^i \ mod \ p(X)$$

*Fig. 2*

Fig. 3a

Fig. 3b

Fig. 4a

*460*

```
┌─────────────┐
│   LWE(m)    │──~ 461
└─────────────┘
       │
       ▼
┌─────────────┐
│   ModSw     │──~ 462
└─────────────┘
       │
       ▼
┌─────────────┐
│   LWE'(m)   │──~ 463
└─────────────┘
       │
       ▼
┌─────────────────┐
│ BlindRot        │
│   ┌─────────┐   │
│   │   432   │◄──┼──~ 464          ┌ ─ ─ ─ ─ ─ ┐
│   └─────────┘   │                    │    456    │
└─────────────────┘                 └ ─ ─ ─ ─ ─ ┘
       │
       ▼
┌─────────────────┐
│ GLWE(f(m)Xᵏ     │──~ 465
│   + ··· )       │
└─────────────────┘
       │
       ▼
┌─────────────┐
│  SampleEx   │──~ 466
└─────────────┘
       │
       ▼
┌─────────────┐
│ LWE''(f(m)) │──~ 467
└─────────────┘
       │
       ▼
┌─────────────┐
│   KeySw     │──~ 468
└─────────────┘
       │
       ▼
┌──────────────┐
│ LWE'''(f(m)) │──~ 469
└──────────────┘
```

$GLWE(f(m)X^k + \cdots)$

$LWE''(f(m))$

$LWE'''(f(m))$

*Fig. 4b*

**500**

510

520

530

540

550

*Fig. 5a*

**600**

610

610

621

622

623

624

625

630

*Fig. 5b*

**1000**

1010

1020

*Fig. 5c*

1110

1130

1120

1122

1124

1126

1140

*Fig. 5d*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21290025 A
- EP 21290080, Zama

**Non-patent literature cited in the description**

- **I. CHILLOTTI et al.** TFHE: Fast fully homomorphic encryption over the torus. *J. Cryptol.,* 2020, vol. 33 (1), 34-91
- Programmable bootstrapping enables efficient homomorphic inference of deep neural networks. **I. CHILLOTTI et al.** Cyber Security Cryptography and Machine Learning (CSCML 2021). Springer, 2021, vol. 12718, 1-19
- **J. VON ZUR GATHEN ; J. GERHARD.** Modern Computer Algebra. Cambridge University Press, 2013
- **D. J. BERNSTEIN.** Multidigit multiplication for mathematicians. *Unpublished manuscript, https://cr.yp.to/papers.html#m3*
- Homomorphic encryption: From private-key to public-key. **R. ROTHBLUM.** Theory of Cryptography (TCC 2011). Springer, 2011, vol. 6597, 219-234
- **M, ALBRECHT et al.** On the concrete hardness of Learning with Errors. *Journal of Mathematical Cryptology,* 2015, vol. 9 (3), 169-203
- **J. VON ZUR GATHEN ; J. GERHARD.** Modern Computer Algebra. Cambridge University Press, 2003
- **I. CHILLOTTL et al.** *CONCRETE: Concrete Operates oN Ciphertexts Rapidly by Extending TfhE, https://homomorphlcencryption.org/ wp-content/uploade/2020/12/wahc20_demo_damien.pdf*